# EUROPEAN PATENT APPLICATION

(11) **EP 4 821 978 A2**
(43) Date of publication of application: **14.10.2026**
(21) Application number: 26201547.2
(22) Date of filing: 20.09.2022
(51) Int. Cl.: C08K 3/22

(54) **CURABLE COMPOSITION**

(30) Priority: 30.09.2021 KR 20210129972; 19.09.2022 KR 20220117998
(62) Document number(s) of the earlier application(s) in accordance with Art. 76 EPC: 22876735.6 / 4 289 880
(71) Applicant: LG Chem, Ltd., Yeoui-daero, Youngdungpo-gu Seoul 07336 (KR)
(72) Inventor: KIM, Do Yeon, 34122 Daejeon (KR); SON, Ho Yeon, 34122 Daejeon (KR); KANG, Yang Gu, 34122 Daejeon (KR); JUN, Shin Hee, 34122 Daejeon (KR); LEE, Ha Na, 34122 Daejeon (KR); LEE, Jeong Hyun, 34122 Daejeon (KR)
(74) Representative: Hoffmann Eitle

(57) **Abstract**

The present application can provide a curable composition or a thermal interface material, and the like that exhibits low adhesion force to a predetermined adherend while having a low density as well as exhibiting a high thermal conductivity, and provide a curable composition or a thermal interface material, and the like that secures excellent flame retardant properties, and exhibits ejection properties and thixotropy suitable for processes in a state where halogen flame retardants or phosphorus-based flame retardants are not used, or the use ratio thereof is minimized.

## Description

### Technical Field

### Cross-Reference with Related Applications

This application claims the benefit of priority based on Korean Patent Application No. 10-2021-0129972 dated September 30, 2021 and Korean Patent Application No. 10-2022-0117998 dated September 19, 2022, the disclosures of which are incorporated herein by reference in their entirety.

### Technical Field

The present application relates to a curable composition, a thermal interface material (TIM), and a use thereof.

### Background Art

As the number of electric or electronic devices requiring heat management, such as batteries, increases, the importance of heat dissipation materials such as thermal interface materials (TIMs) increases. Various types of heat dissipation materials are known. As one of the conventional heat dissipation materials, a material in which a resin binder is filled with a filler having heat dissipation properties is known (for example, Patent Document 1).

In such a heat dissipation material, a silicone resin, a polyolefin resin, an acrylic resin, or an epoxy resin, and the like is usually used as the resin binder.

The heat dissipation material is basically required to have an excellent thermal conductivity, and required to have additional functions as well depending on the use. For example, depending on the use, the heat dissipation material may be required to exhibit low adhesion force to a specific adherend together with the high thermal conductivity.

For example, when it is necessary to replace a part in contact with a heat dissipation material in a product, or necessary to change a location or the like of a heat dissipation material in a process, the heat dissipation material needs to exhibit low adhesion force.

Among known heat dissipation materials, materials showing low adhesion force include materials to which a silicone resin is applied as the resin binder. However, the silicone resin is relatively expensive. In addition, the silicone resin comprises components that cause contact failure and the like when applied to electronic/electrical products, so that the uses are limited.

The polyurethane material applied even in Patent Document 1 can form a heat dissipation material having high thermal conductivity, and has various other advantages, but is a material exhibiting high adhesion force to most adherends.

A method of lowering adhesion force of a material exhibiting high adhesion force includes a method of blending a component known as a so-called plasticizer. However, the plasticizers formulated in a large amount for control of adhesion force has a problem of damaging the inherent merits of the material itself or being eluted during a use process, and the like.

Meanwhile, the heat dissipation material may require flame retardant properties in order to secure safety against fires generated in electrical products, electronic products, or batteries, and the like. A method of securing flame retardant properties includes a method of blending a component known as a so-called flame retardant.

The flame retardant should have good mixing properties with respect to raw materials and additionally added additives, do not affect the mechanical properties of the final product, and minimize generation of toxic gases in consideration of the use environment.

As the flame retardant, a halogen element-containing flame retardant (a so-called halogen flame retardant, for example, a bromine-based flame retardant) may be used. The halogen element-containing flame retardant can secure excellent flame retardant properties, but there is a problem that when incinerated, dioxin, which is an environmentally harmful substance, of course has corrosiveness, so that it may affect the mechanical properties of the final product, and is harmful to the human body.

In addition, there are cases in which a phosphorus (P) element-containing flame retardant (a so-called phosphorus-based flame retardant) is used as the flame retardant. The phosphorus element-containing flame retardant can secure excellent flame retardant properties while being less toxic compared to the halogen element-containing flame retardant, but it is known that it is expensive and has a problem of weakening heat dissipation properties.

### [Prior Art Documents]

(Patent Document 1) Korean Laid-Open Patent Publication No. 10-2016-0105354

### Disclosure

### Technical Problem

The present application is intended to provide a curable composition, a thermal interface material (TIM), and a use thereof. The thermal interface material may be one formed by curing the curable composition. One object of the present application is that the curable composition or the thermal interface material, and the like exhibits low adhesion force to a predetermined adherend while having a low density as well as exhibiting a high thermal conductivity.

The present application is also intended to secure excellent flame retardant properties, and to exhibit ejection properties and thixotropy suitable for processes in a state where halogen flame retardants or phosphorus-based flame retardants are not used, or the use ratio thereof is minimized.

It is one object of the present application to provide a product comprising the curable composition, a cured product of the curable composition, or a thermal interface material.

### Technical Solution

Among the physical properties mentioned in the present application, if the measurement temperature affects a physical property, the relevant physical property is a physical property measured at room temperature, unless otherwise specified.

The term room temperature as used in the present application is a natural temperature without warming or cooling, which may mean, for example, any one temperature within a range of 10°C to 30°C, for example, a temperature of about 15°C or more, about 18°C or more, about 20°C or more, about 23°C or more, about 27°C or less, or 25°C. In this specification, unless otherwise specified, the unit of temperature is Celsius (°C).

Among the physical properties mentioned in the present application, if the measurement pressure affects a physical property, the relevant physical property is a physical property measured at normal pressure, unless otherwise specified.

The term normal pressure as used in the present application is a natural pressure without pressurization or depressurization, which refers to an atmospheric pressure in a range of about 700 mmHg to 800 mmHg as the normal pressure.

The term 'a to b' as used in the present application means 'within the range between a and b while including a and b'. For example, the fact that includes a to b parts by weight has the same meaning as included in the range of a to b parts by weight.

The term relative humidity as used in the present application is expressed as a percentage (%) of the ratio of the amount of water vapor contained in the current air of a unit volume to the saturated vapor pressure that the air of the unit volume can contain at the maximum, which can be expressed in RH%.

The term weight average molecular weight (M_{w}) as used in the present application may be measured using GPC (Gel permeation chromatography), which can be, specifically, measured according to the following physical property measurement method. In addition, the term polydispersity index (PDI) as used in the present application is a value (M_{w}/Mₙ) obtained by dividing a weight average molecular weight (M_{w}) by a number average molecular weight (Mₙ), which means a molecular weight distribution of a polymer. The number average molecular weight (Mₙ) may also be measured using GPC (Gel permeation chromatography) if necessary.

The term excellent thermal conductivity as used in the present application may mean that in a state where a curable composition is made into a cured product (sample) having a diameter of 2 cm or more and a thickness of 5 mm, the measured thermal conductivity, as measured along the thickness direction of the sample according to ASTM D5470 standard or ISO 22007- 2 standard, is about 2.0 W/mK or more, 2.1 W/mK or more, 2.2 W/mK or more, 2.3 W/mK or more, 2.4 W/mK or more, 2.5 W/mK or more, 2.6 W/mK or more, 2.7 W/mK or more, 2.8 W/mK or more, 2.9 W/mK or more, or 3.0 W/mK or more or so.

The terms low specific gravity or low-specific gravity as used in the present application may mean a case where for a curable composition, a cured product of the curable composition or a filler, and the like, the specific gravity measured at room temperature is 3 or less.

The terms high specific gravity or high-specific gravity as used in the present application may mean a case where for a curable composition, a cured product of the curable composition or a filler, and the like, the specific gravity measured at room temperature is more than 3.

The term excellent flame retardancy as used in the present application may mean a case where the result evaluated according to the following physical property measurement method (UL94V) is Grade V-0 or more.

The term viscosity as used in the present application may be a value measured at 25°C unless otherwise specified, which may be measured, specifically, according to the following physical property measurement method.

The meaning that a specific material is not substantially included as the term used in the present application is a meaning which does not allow to intentionally comprise the specific material. However, in the case of naturally comprising the specific material, it can be regarded that it is not substantially included if it is included in an amount of 0.1 wt% or less, 0.05 wt% or less, or 0.01 wt% or less, relative to the total weight, unless otherwise specified.

The term substitution as used in the present application means that a hydrogen atom bonded to a carbon atom of a compound is changed to another substituent, where the position to be substituted is not particularly limited if it is a position in which the hydrogen atom is substituted, that is, a position in which the substituent is substitutable, and when two or more substituents are substituted, the substituents may be the same as or different from each other.

The term halogen or halogen element used in the present application means elements of Group 17 on the periodic table, and in the present application, it may mean a group consisting of chlorine (Cl), iodine (I), bromine (Br) and fluorine (F) among the elements of Group 17.

The term substituent as used in the present application means an atom or atomic group that replaces one or more hydrogen atoms on the parent chain of a hydrocarbon. In addition, the substituent is described below, but is not limited thereto, and the substituent may be further substituted with the substituent described below or may not be substituted with any substituent, unless otherwise specified herein.

The term alkyl group or alkylene group as used in the present application may be a linear or branched alkyl group or alkylene group with 1 to 20 carbon atoms, or 1 to 16 carbon atoms, or 1 to 12 carbon atoms, or 1 to 8 carbon atoms, or 1 to 6 carbon atoms, or a cyclic alkyl group or alkylene group with 3 to 20 carbon atoms, or 3 to 16 carbon atoms, or 3 to 12 carbon atoms, or 3 to 8 carbon atoms, or 3 to 6 carbon atoms, unless otherwise described. Here, the cyclic alkyl group or alkylene group also includes an alkyl group or alkylene group having only a ring structure, and an alkyl group or alkylene group including a ring structure. For example, both a cyclohexyl group and a methyl cyclohexyl group correspond to the cyclic alkyl group. Also, for example, for example, the alkyl group or alkylene group may be exemplified by, specifically, methyl(ene), ethyl(ene), n-propyl(ene), isopropyl(ene), n-butyl(ene), isobutyl(ene), tert-butyl(ene), sec-butyl(ene), 1-methyl-butyl(ene), 1-ethyl-butyl(ene), n-pentyl(ene), isopentyl(ene), neopentyl(ene), tert-pentyl(ene), n-hexyl(ene), 1-methylpentyl(ene), 2-methylpentyl(ene), 4-methyl-2-pentyl(ene), 3,3-dimethylbutyl(ene), 2-ethylbutyl(ene), n-heptyl(ene), 1-methylhexyl(ene), n-octyl(ene), tert-octyl(ene), 1-methylheptyl(ene), 2-ethylhexyl(ene), 2-propylpentyl(ene), n-nonyl(ene), 2,2-dimethylheptyl(ene), 1-ethylpropyl(ene), 1,1-dimethylpropyl(ene), isohexyl(ene), 2-methylpentyl(ene), 4-methylhexyl(ene), 5-methylhexyl(ene), and the like, but is not limited thereto. In addition, the cycloalkyl group or cycloalkylene group may be exemplified by, specifically, cyclopropyl(ene), cyclobutyl(ene), cyclopentyl(ene), 3-methylcyclopentyl(ene), 2,3-dimethylcyclopentyl(ene), cyclohexyl(ene), 3-methylcyclohexyl(ene), 4-methylcyclohexyl(ene), 2,3-dimethylcyclohexyl(ene), 3,4,5-trimethylcyclohexyl(ene), 4-tert-butylcyclohexyl(ene), cycloheptyl(ene), cyclooctyl(ene), and the like, but is not limited thereto.

The term alkenyl group or alkenylene group as used in the present application may be a linear or branched acyclic alkenyl group or alkenylene group with 2 to 20 carbon atoms, or 2 to 16 carbon atoms, or 2 to 12 carbon atoms, or 2 to 8 carbon atoms, or 2 to 6 carbon atoms; or a cyclic alkenyl group or alkenylene group with 3 to 20 carbon atoms, or 3 to 16 carbon atoms, or 3 to 12 carbon atoms, or 3 to 8 carbon atoms, or 3 to 6 carbon atoms, unless otherwise described. Here, when an alkenyl group or alkenylene group with a ring structure is included, it corresponds to a cyclic alkenyl group or alkenylene group. Also, for example, it may be exemplified by ethenyl(ene), n-propenyl(ene), isopropenyl(ene), n-butenyl(ene), isobutenyl(ene), tert-butenyl(ene), sec-butenyl(ene), 1-methyl-butenyl(ene), 1-ethyl-butenyl(ene), n-pentenyl(ene), isopentenyl(ene), neopentenyl(ene), tert-pentenyl(ene), n-hexenyl(ene), 1-methylpentenyl(ene), 2-methylpentenyl(ene), 4-methyl-2-pentenyl(ene), 3,3-dimethylbutenyl(ene), 2-ethylbutenyl(ene), n-heptenyl(ene), 1-methylhexenyl(ene), n-octenyl(ene), tert-octenyl(ene), 1-methylheptenyl(ene), 2-ethylhexenyl(ene), 2-propylpentenyl(ene), n-nonylenenyl(ene), 2,2-dimethylheptenyl(ene), 1-ethylpropenyl(ene), 1,1-dimethylpropenyl(ene), isohexenyl(ene), 2-methylpentenyl(ene), 4-methylhexenyl(ene), 5-methylhexenyl(ene), and the like, but is not limited thereto. In addition, the cycloalkenyl group or cycloalkenylene group may be exemplified by, specifically, cyclopropenyl(ene), cyclobutenyl(ene), cyclopentenyl(ene), 3-methylcyclopentenyl(ene), 2,3-dimethylcyclopentenyl(ene), cyclohexenyl(ene), 3-methylcyclohexenyl(ene), 4-methylcyclohexenyl(ene), 2,3-dimethylcyclohexenyl(ene), 3,4,5-trimethylcyclohexenyl(ene), 4-tert-butylcyclohexenyl(ene), cycloheptenyl(ene), cyclooctenyl(ene), and the like, but is not limited thereto.

The term alkynyl group or alkynylene group as used in the present application may be a linear or branched acyclic alkynyl group or alkynylene group with 2 to 20 carbon atoms, or 2 to 16 carbon atoms, or 2 to 12 carbon atoms, or 2 to 8 carbon atoms, or 2 to 6 carbon atoms, or may be a cyclic alkynyl group or alkynylene group with 3 to 20 carbon atoms, or 3 to 16 carbon atoms, or 3 to 12 carbon atoms, or 3 to 8 carbon atoms, or 3 to 6 carbon atoms, unless otherwise described. Here, when an alkynyl group or alkynylene group with a ring structure is included, it corresponds to a cyclic alkynyl group or alkynylene group. Also, for example, it may be exemplified by ethynyl(ene), n-propynyl(ene), isopropynyl(ene), n-butynyl(ene), isobutynyl(ene), tert-butynyl(ene), sec-butynyl(ene), 1-methyl-butynyl(ene), 1-ethyl-butynyl(ene), n-pentynyl(ene), isopentynyl(ene), neopentynyl(ene), tert-pentynyl(ene), n-hexynyl(ene), 1-methylpentynyl(ene), 2-methylpentynyl(ene), 4-methyl-2-pentynyl(ene), 3,3-dimethylbutynyl(ene), 2-ethylbutynyl(ene), n-heptynyl(ene), 1-methylhexynyl(ene), n-octynyl(ene), tert-octynyl(ene), 1-methylheptynyl(ene), 2-ethylhexynyl(ene), 2-propylpentynyl(ene), n-nonynyl(ene), 2,2-dimethylheptynyl(ene), 1-ethylpropynyl(ene), 1,1-dimethylpropynyl(ene), isohexynyl(ene), 2-methylpentynyl(ene), 4-methylhexynyl(ene), 5-methylhexynyl(ene), and the like, but is not limited thereto. In addition, the cycloalkynyl group or cycloalkynylene group may be exemplified by, specifically, cyclopropynyl(ene), cyclobutynyl(ene), cyclopentynyl(ene), 3-methylcyclopentynyl(ene), 2,3-dimethylcyclopentynyl(ene), cyclohexynyl(ene), 3-methylcyclohexynyl(ene), 4-methylcyclohexynyl(ene), 2,3-dimethylcyclohexynyl(ene), 3, 4,5-trimethylcyclohexynyl(ene), 4-tert-butylcyclohexynyl(ene), cycloheptynyl(ene), cyclooctynyl(ene), and the like, but is not limited thereto.

The alkyl group, alkylene group, alkenyl group, alkenylene group, alkynyl group and alkynylene group may also be optionally substituted with one or more substituents. In this case, the substituent may be one or more selected from the group consisting of halogen (chlorine (Cl), iodine (I), bromine (Br), fluorine (F)), an aryl group, a heteroaryl group, an epoxy group, an alkoxy group, a cyano group, a carboxyl group, an acryloyl group, a methacryloyl group, an acryloyloxy group, a methacryloyloxy group, a carbonyl group and a hydroxy group, but is not limited thereto.

The term aryl group as used in the present application means an aromatic ring in which one hydrogen is removed from an aromatic hydrocarbon ring, where the aromatic hydrocarbon ring may include a monocyclic or polycyclic ring. The aryl group does not have a particularly limited number of carbon atoms, but may be an aryl group with 6 to 30 carbon atoms, or 6 to 26 carbon atoms, or 6 to 22 carbon atoms, or 6 to 20 carbon atoms, or 6 to 18 carbon atoms, or 6 to 15 carbon atoms, unless otherwise described. In addition, the term arylene group as used in the present application means that the aryl group has two bonding positions, that is, a divalent group. The description of the aryl group as described above may be applied, except that these are each a divalent group. The aryl group may be exemplified by, for example, a phenyl group, a phenylethyl group, a phenylpropyl group, a benzyl group, a tolyl group, a xylyl group or a naphthyl group, and the like, but is not limited thereto.

The term heteroaryl group as used in the present application is an aromatic ring containing one or more heteroatoms other than carbon, which may contain, specifically, one or more heteroatoms selected from the group consisting of nitrogen (N), oxygen (O), sulfur (S), selenium (Se) and tellurium (Te). In this case, the atoms constituting the ring structure of the heteroaryl group may be referred to as ring atoms. In addition, the heteroaryl group may include a monocyclic or polycyclic ring. The heteroaryl group does not have a particularly limited number of carbon atoms, but may be a heteroaryl group with 2 to 30 carbon atoms, or 2 to 26 carbon atoms, or 2 to 22 carbon atoms, or 2 to 20 carbon atoms, or 2 to 18 carbon atoms, or 2 to 15 carbon atoms, unless otherwise described. In another example, the heteroaryl group does not have a particularly limited number of ring atoms, but may be a heteroaryl group with 5 to 30, 5 to 25, 5 to 20, 5 to 15, 5 to 10, or 5 to 8 ring atoms. The heteroaryl group may be exemplified by, for example, a thiophene group, a furan group, a pyrrole group, an imidazolyl group, a thiazolyl group, an oxazolyl group, an oxadiazolyl group, a triazolyl group, a pyridyl group, a bipyridyl group, a pyrimidyl group, a triazinyl group, an acridyl group, a pyridazinyl group, a pyrazinyl group, a quinolinyl group, a quinazolinyl group, a quinoxalinyl group, a phthalazinyl group, a pyridopyrimidinyl group, a pyridopyrazinyl group, a pyrazinopyrazinyl group, an isoquinolinyl group, an indole group, a carbazolyl group, a benzoxazolyl group, a benzimidazolyl group, a benzothiazolyl group, a benzocarbazolyl group, a dibenzocarbazolyl group, a benzothiophene group, a dibenzothiophene group, a benzofuran group, a dibenzofuran group, a benzosilol group, a dibenzosilol group, a phenanthrolinyl group, an isoxazolyl group, a thiadiazolyl group, a phenothiazinyl group, a phenoxazine group and condensed structures thereof, and the like, but is not limited thereto.

In addition, the term heteroarylene group as used in the present application means that the heteroaryl group has two bonding positions, that is, a divalent group. The description of the heteroaryl group as described above may be applied, except that these are each a divalent group.

The aryl group or heteroaryl group may also be optionally substituted with one or more substituents. In this case, the substituent may be one or more selected from the group consisting of halogen (chlorine (Cl), iodine (I), bromine (Br), fluorine (F)), an aryl group, a heteroaryl group, an epoxy group, an alkoxy group, a cyano group, a carboxyl group, an acryloyl group, a methacryloyl group, an acryloyloxy group, a methacryloyloxy group, a carbonyl group, and a hydroxy group, but is not limited thereto.

The present application relates to a curable composition. The term curable composition as used in the present application means a composition that is cured by a curing reaction. In the present application, it can be confirmed by FT-IR (Fourier Transform Infrared), DSC (Differential Thermal Analysis), and DMA (Dynamic Mechanical Analysis) measurements whether the curing is properly completed by the curing reaction. For example, when the main resin is a polyol resin and the curing agent is an isocyanate compound, it can be confirmed from the fact that the conversion based on the NCO peak at around 2250 cm⁻¹ confirmed by FT-IR analysis is 80% or more. In addition, specifically, when the main resin is a polyol resin and the curing agent is an isocyanate compound, it can be confirmed from the fact that the NCO peak conversion at around 2250 cm⁻¹ confirmed by FT-IR analysis based on 24-hour curing at room temperature and normal humidity conditions is 80% or more. In the present application, the curing may be the same as the meaning to attempt so that a curing reaction is performed, as well as that the curing has been properly completed as above.

The curable composition according to one example of the present application may be a resin composition. The term resin composition as used in the present application means a composition comprising a component known in the art as a resin, or a composition that does not comprise a resin, but comprises a component capable of forming a resin through a curing reaction or the like. Therefore, in the present application, the scope of the term resin or resin component includes not only components generally known as resins, but also components capable of forming resins through curing and/or polymerization reactions.

The curable composition according to one example of the present application may be cured to form a thermal interface material (TIM). Therefore, in the present application, the cured product of the curable composition and the thermal interface material may refer to the same subject.

The curable composition according to one example of the present application may be a one-component or two-component composition. The term one-component composition as used in the present application means a curable composition in which components participating in curing are included in a state where they are in physical contact with each other. In addition, the term two-component composition as used in the present application may mean a curable composition in which at least some of components participating in curing are physically separated to be divided, and included.

The curable composition according to one example of the present application may be a room temperature curing type, a heat curing type, an energy ray curing type, and/or a moisture curing type. The term room temperature curing type as used in the present application refers to a curable composition that a curing reaction can be initiated and/or proceed at room temperature. Also, the term heat curing type as used in the present application refers to a curable composition that a curing reaction can be initiated and/or proceed by application of heat. In addition, the term energy ray curing type as used in the present application refers to a curable composition that a curing reaction can be initiated and/or proceed by irradiation with energy rays (e.g., ultraviolet rays or electron beams, etc.). Furthermore, the term moisture curing type as used in the present application refers to a curable composition that a curing reaction can be initiated and/or proceed in the presence of moisture.

The curable composition according to one example of the present application may be a solvent type or a solventless type. The solventless type may be appropriate when considering an application efficiency aspect or the load to the environment, and the like.

The curable composition according to one example of the present application may be a polyurethane composition. In this case, the curable composition may comprise polyurethane, or may comprise a component capable of forming polyurethane. For example, a thermal interface material that is a cured product of the curable composition may comprise the polyurethane. In one example, the polyurethane may be formed by a reaction of components in a main part and a curing agent part, which are described below.

The curable composition according to one example of the present application, or the cured product thereof may have at least one physical property among the following physical properties. The physical properties as described below are each independent, and one physical property does not take precedence over another physical property, and at least one, or two or more of the physical properties as described below may be satisfied. The physical properties as described below are caused by a combination of the respective components included in the curable composition or the cured product thereof.

The curable composition according to one example of the present application, or the cured product thereof may exhibit low adhesion force to a specific adherend, or form a cured product capable of exhibiting low adhesion force. Such a curable composition may be the polyurethane composition. The polyurethane is known as an adhesive material capable of exhibiting excellent adhesion to various adherends. Therefore, as a method of making the polyurethane composition exhibit low adhesion force to an adherend, a method of introducing a component that lowers the adhesion force, such as a plasticizer, is usually used. When components of such a plasticizer and the like are applied, it is possible to lower the adhesion force of the polyurethane material, but there may be a problem that the relevant component deteriorates other physical properties which could be secured in the polyurethane, or it elutes out of the material during the use process of the polyurethane material. However, in the present application, the low adhesion force can also be achieved for polyurethane materials while minimizing the used amount of adhesion force reducing components such as plasticizers. Therefore, in the present application, it is possible to provide a material that solves the problem of high adhesion force that is not required depending on the use while taking the advantages of the polyurethane material.

The curable composition according to one example of the present application, or the cured product thereof may have adhesion force to aluminum of 1 N/mm² or less. In another example, the upper limit of the adhesion force of the curable composition or the cured product to aluminum may also be 0.1 N/mm², 0.099 N/mm², 0.098 N/mm², 0.097 N/mm², 0.096 N/mm², 0.095 N/mm², 0.094 N/mm², 0.093 N/mm², 0.092 N/mm², 0.091 N/mm² or 0.09 N/mm². The adhesion force to aluminum of the curable composition or the cured product thereof may be less than or equal to any one of the above-described upper limits. In the present application, the lower limit of the adhesion force to aluminum is not particularly limited. In one example, the adhesion force to aluminum may be 0 N/mm² or more, or more than 0 N/mm². The curable composition may be a curable composition that the adhesion force to aluminum is not substantially measured, or may be a curable composition capable of forming a cured product that it is not substantially measured. Therefore, the adhesion force to aluminum may be less than or equal to any one of the above-described upper limits while being 0 N/mm² or more, or more than 0 N/mm². The adhesion force of the curable composition or the cured product thereof to aluminum can be measured in the manner described in Examples herein.

The curable composition according to one example of the present application, or the cured product thereof may have adhesion force to polyester of 100 gf/cm or less. In another example, the upper limit of the adhesion force of the curable composition or the cured product to polyester may also be 99.9 gf/cm, 99.8 gf/cm, 99.7 gf/cm, 99.6 gf/cm, 99.5 gf/cm, 99.4 gf/cm, 99.3 gf/cm, 99.2 gf/cm, 99.1 gf/cm, or 99 gf/cm. The adhesion force of the curable composition or the cured product thereof to polyester may be equal to or less than any one of the above-described upper limits. In the present application, the lower limit of the adhesion force to the polyester is not particularly limited. In one example, the lower limit of the adhesion force of the curable composition or the cured product to the polyester may also be 0 gf/cm, 2 gf/cm, 4 gf/cm, 6 gf/cm, 8 gf/cm, 10 gf/cm, 12 gf/cm, 14 gf/cm, 16 gf/cm, 18 gf/cm, or 20 gf/cm or so. The curable composition or the cured product thereof may exhibit substantially no adhesion force to polyester. The adhesion force of the curable composition or the cured product thereof to polyester may also be in a range between any lower limit of the above-described lower limits and any one upper limit of the above-described upper limits. The adhesion force of the curable composition or the cured product thereof to polyester can be measured in the manner described in Examples herein.

The curable composition according to one example of the present application, or the cured product thereof may exhibit excellent thermal conductivity properties. For example, the lower limit of the thermal conductivity of the curable composition or the cured product thereof may also be 2.0 W/mK, 2.1 W/mK, 2.2 W/mK, 2.3 W/mK, 2.4 W/mK, 2.5 W/mK, 2.6 W/mK, 2.7 W/mK, 2.8 W/mK, 2.9 W/mK, or 3 W/mK or so. The thermal conductivity may be more than or equal to any one lower limit of the above-described lower limits. The upper limit of the thermal conductivity is not particularly limited. For example, the upper limit of the thermal conductivity of the curable composition or the cured product thereof may also be 10 W/mK, 9 W/mK, 8 W/mK, 7 W/mK, 6 W/mK, 5 W/mK, or 4 W/mK or so. The thermal conductivity may be in a range between any one low limit of the above-described lower limits and any one upper limit of the above-described upper limits. The thermal conductivity of such a curable composition or the cured product thereof can be measured by the method disclosed in Examples to be described below.

The curable composition according to one example of the present application, or the cured product thereof may also exhibit appropriate hardness. For example, if the hardness of the curable composition or the cured product thereof is too high, there may be a problem due to excessive brittleness. In addition, through the adjustment of the hardness of the curable composition or the cured product thereof, it is possible to secure impact resistance and vibration resistance, and to secure the durability of the product, according to the application purpose. The upper limit of the hardness of the curable composition or the cured product thereof in Shore OO type may be 100, 98, 96, 94, 92, or 90. The Shore OO type hardness may be less than or equal to any one upper limit of the above-described upper limits. The lower limit of the Shore OO type hardness may be 10, 15, 20, 25, 30, 35, 40, 45, 50, 55, 60, 65, 70, 75, or 80. The Shore OO type hardness may be more than or equal to any one lower limit of the above-described lower limits. The Shore OO type hardness may also be in a range between any one upper limit of the above-described upper limits and any one lower limit of the above-described lower limits. The hardness of such a curable composition or the cured product thereof can be measured by the method disclosed in Examples to be described below.

The curable composition according to one example of the present application, or the cured product thereof may also exhibit appropriate flexibility. For example, as the flexibility of the curable composition or the cured product thereof is adjusted to a desired level, the application uses may be greatly expanded. For example, the upper limit of the curvature radius of the curable composition or the cured product thereof may be 20 mm, 19 mm, 18 mm, 17 mm, 16 mm, 15 mm, 14 mm, 13 mm, 12 mm, 11 mm, 10 mm, or 9 mm or so. The curvature radius may be less than or equal to any one upper limit of the above-described upper limits. The lower limit of the curvature radius may also be, for example, about 1 mm, 2 mm, 3 mm, 4 mm, 5 mm, 6 mm, or 7 mm or so. The curvature radius may be more than or equal to any one lower limit of the above-described lower limits. The curvature radius may also be in a range between any one upper limit of the above-described upper limits and any one lower limit of the above-described lower limits. The curvature radius of such a curable composition or the cured product thereof can be measured by the method disclosed in Examples to be described below.

The curable composition according to one example of the present application, or the cured product thereof may have insulation properties. That is, the curable composition may have insulation properties and/or form a cured product having insulation properties. For example, in the curable composition or the cured product thereof, the lower limit of the dielectric breakdown voltage measured in accordance with ASTM D149 may be 3 kV/mm, 5 kV/mm, 7 kV/mm, 10 kV/mm, 15 kV/mm, or 20 kV/mm or so. The dielectric breakdown voltage may be more than or equal to any one lower limit of the above-described lower limits. The higher the value of the dielectric breakdown voltage, it seems to have excellent insulation properties, and thus the upper limit is not particularly limited, but considering the composition or the like of the curable composition, the upper limit of the dielectric breakdown voltage may be 50 kV/mm, 45 kV/mm. mm, 40 kV/mm, 35 kV/mm, or 30 kV/mm or so. The dielectric breakdown voltage may be less than or equal to any one upper limit of the above-described upper limits. Such a dielectric breakdown voltage can be controlled by adjusting the insulation properties of the curable composition, which can be achieved, for example, by applying an insulating filler in the composition. In general, among fillers, a ceramic filler is known as a component capable of securing insulation properties. In addition, if the cured product of the curable composition can secure electrical insulation properties as above, it is possible to secure stability while maintaining performance with respect to various materials, for example, a case or a battery cell included in a battery module.

The curable composition according to one example of the present application, or the cured product thereof may have flame retardancy. The curable composition or the cured product thereof may exhibit Grade V-0 in the UL 94 V Test (Vertical Burning Test). Accordingly, it is possible to secure stability against fires and other accidents that are of concern depending on the application uses of the curable composition. Also, conventionally, in order to secure the flame retardancy, it was generally secured through a halogen element-containing flame retardant, a phosphorus element-containing flame retardant, and a combination thereof. However, the curable composition or the cured product thereof may have a result of Grade V-0 as measured according to UL 94 V Test through an appropriate combination of a polyol component and a filler component, which are described below, without substantially comprising a halogen element-containing flame retardant and a phosphorus (P) element-containing flame retardant.

In the curable composition according to one example of the present application, or the cured product thereof, the combined content of halogen and phosphorus elements may be 0.3 wt% or less relative to the total content of the curable composition or the cured product. The upper limit of the combined content of the halogen and phosphorus elements may be 0.29 wt%, 0.28 wt%, 0.27 wt%, 0.26 wt%, 0.25 wt%, 0.24 wt%, 0.23 wt%, 0.22 wt%, 0.21 wt%, or 0.2 wt% relative to the total content of the curable composition or the cured product. The combined content of the halogen and phosphorus elements may be less than or equal to any one upper limit of the above-described upper limits. The lower limit of the combined content of the halogen and phosphorus elements is not particularly limited, but may be 0 wt% (not included), or more than 0 wt% relative to the total content of the curable composition or the cured product. It can be confirmed that the curable composition or the cured product thereof does not substantially comprise a halogen element-containing flame retardant and a phosphorus element-containing flame retardant through the combined content of halogen and phosphorus elements. The combined content of the halogen and phosphorus elements may be more than or equal to any one lower limit of the above-described lower limits. The combined content of the halogen and phosphorus elements may also be in a range between any one upper limit of the above-described upper limits and any one lower limit of the above-described lower limits.

The halogen element content, the phosphorus element content, and the combined content of the halogen element and the phosphorus element in the curable composition according to one example of the present application, or a cured product may be measured through an ICP analysis method. As the ICP analysis method used in the present application, ICP-OES (Inductively Coupled Plasma-Optical Emission Spectrometer), ICP-AES (Inductively Coupled Plasma-Atomic Emission Spectrometer), ICP-MS (Inductively Coupled Plasma Mass Spectrometer), or ICP-AAS (Inductively Coupled Plasma-Atomic Absorption Spectrometer), and the like can be used according to appropriate circumstances, and considering the measurement target, it can be preferably analyzed using ICP-OES, and specifically, it can be measured in the manner described in Examples of the present specification. The halogen element content, the phosphorus element content, and the combined content of the halogen element and the phosphorus element may be measured by the method disclosed in Examples to be described below.

In the curable composition according to one example of the present application, or the cured product, the halogen element content may be 0.3 wt% or less relative to the total content of the curable composition or the cured product. The upper limit of the halogen element content may be 0.29 wt%, 0.28 wt%, 0.27 wt%, 0.26 wt%, 0.25 wt%, 0.24 wt%, 0.23 wt%, 0.22 wt%, 0.21 wt%, or 0.2 wt% relative to the total content of the curable composition or the cured product. The halogen element content may be less than or equal to any one upper limit of the above-described upper limits. The lower limit of the halogen element content is not particularly limited, but may be 0 wt% (not included), or more than 0 wt% relative to the total content of the curable composition or the cured product. It can be confirmed that the curable composition or the cured product thereof does not substantially include a halogen element-containing flame retardant through the halogen element content. The halogen content may be more than or equal to any one lower limit of the above-described lower limits. The halogen content may also be in a range between any one upper limit of the above-described upper limits and any one lower limit of the above-described lower limits.

In the curable composition according to one example of the present application, or the cured product thereof, the phosphorus element content may be 0.3 wt% or less relative to the total content of the curable composition or the cured product. The upper limit of the phosphorus element content may be 0.29 wt%, 0.28 wt%, 0.27 wt%, 0.26 wt%, 0.25 wt%, 0.24 wt%, 0.23 wt%, 0.22 wt%, 0.21 wt%, or 0.2 wt% relative to the total content of the curable composition or the cured product The phosphorus element content may be less than or equal to any one upper limit of the above-described upper limits. The lower limit of the phosphorus element content is not particularly limited, but may be 0 wt% (not included), or more than 0 wt% relative to the total content of the curable composition or the cured product. It can be confirmed that the curable composition or the cured product thereof does not substantially comprise a phosphorous element-containing flame retardant through the phosphorus element content. The phosphorus content may be more than or equal to any one lower limit of the above-described lower limits. The phosphorus content may also be in a range between any one upper limit of the above-described upper limits and any one lower limit of the above-described lower limits.

In the curable composition according to one example of the present application, or the cured product thereof, the combined content of the halogen element-containing flame retardant and the phosphorus element-containing flame retardant may be 1 wt% or less relative to the total content of the curable composition or the cured material. The upper limit of the combined content of the halogen element-containing flame retardant and the phosphorus element-containing flame retardant may be 0.9 wt%, 0.8 wt%, 0.7 wt%, 0.6 wt%, 0.5 wt%, 0.4 wt%, 0.3 wt%, 0.2 wt%, 0.1 wt%, 0.01 wt%, or 0.001 wt%. The combined content of the halogen element-containing flame retardant and the phosphorus element-containing flame retardant may be less than or equal to any one upper limit of the above-described upper limits. The lower limit of the combined content of the halogen element-containing flame retardant and the phosphorus element-containing flame retardant is not particularly limited, but may be 0 wt% (not included), or more than 0 wt% relative to the total content of the curable composition or the cured product. The combined content of the halogen element-containing flame retardant and the phosphorus element-containing flame retardant may be more than or equal to any one lower limit of the above-described lower limits. The combined content of the halogen element-containing flame retardant and the phosphorus element-containing flame retardant may also be in a range between any one upper limit of the above-described upper limits and any one lower limit of the above-described lower limits.

In the curable composition according to one example of the present application, or the cured product thereof, the content of the halogen element-containing flame retardant may be 1 wt% or less relative to the total content of the curable composition or the cured product. The upper limit of the content of the halogen element-containing flame retardant is 0.9 wt%, 0.8 wt%, 0.7 wt%, 0.6 wt%, 0.5 wt%, 0.4 wt%, 0.3 wt%, 0.2 wt%, 0.1 wt%, 0.01 wt%, or 0.001 wt% relative to the total content of the curable composition or the cured product. The content of the halogen element-containing flame retardant may be less than or equal to any one upper limit of the above-described upper limits. The lower limit of the content of the halogen element-containing flame retardant is not particularly limited, but may be 0 wt% (not included) or more than 0 wt% relative to the total content of the curable composition or the cured product. The content of the halogen element-containing flame retardant may be more than or equal to any one lower limit of the above-described lower limits. The content of the halogen element-containing flame retardant may also be in a range between any one upper limit of the above-described upper limits and any one lower limit of the above-described lower limits.

In the curable composition according to one example of the present application, or the cured product thereof, the content of the phosphorus element-containing flame retardant may be 1 wt% or less relative to the total content of the curable composition or the cured product. The upper limit of the content of the phosphorus element-containing flame retardant may be 0.9 wt%, 0.8 wt%, 0.7 wt%, 0.6 wt%, 0.5 wt%, 0.4 wt%, 0.3 wt%, 0.2 wt%, 0.1 wt%, 0.01 wt%, or 0.001 wt% relative to the total content of the curable composition or the cured product. The content of the phosphorus element-containing flame retardant may be less than or equal to any one upper limit of the above-described upper limits. The lower limit of the content of the phosphorus element-containing flame retardant is not particularly limited, but may be 0 wt% (not included), or more than 0 wt% relative to the total content of the curable composition or the cured product. The content of the phosphorus element-containing flame retardant may be more than or equal to any one lower limit of the above-described lower limits. The content of the phosphorus element-containing flame retardant may also be in a range between any one upper limit of the above-described upper limits and any one lower limit of the above-described lower limits.

The curable composition according to one example of the present application, or the cured product thereof may have a specific gravity of 3 or less. The upper limit of the specific gravity may be 2.99, 2.98, 2.97, or 2.96. The upper limit of the specific gravity may be less than or equal to any one upper limit of the above-described upper limits. Such a specific gravity can be achieved by applying a filler having a low specific gravity and/or applying a surface-treated filler. In addition, the lower limit of the specific gravity is not particularly limited because the lower the specific gravity, the more advantageous it is to reduce the weight of the applied product. For example, the specific gravity may be about 1.5 or more, or 2 or more. The specific gravity may be more than or equal to any one lower limit of the above-described lower limits. The specific gravity may also be in a range between any one upper limit of the above-described upper limits and any one lower limit of the above-described lower limits.

As described above, the curable composition according to one example of the present application, or the cured product thereof can be used as a thermal interface material, and the like, and, for example, can rapidly dissipate heat generated when rapidly charging a battery to reduce the risk of fires or the like. However, in order to implement heat dissipation performance, a thermally conductive filler with a high specific gravity is generally applied thereto in excess, but in this case, the weight of the battery increases, and eventually the weight of the product to which the battery is applied also increases. Particularly, when applied to an electric vehicle, it may be disadvantageous to the fuel efficiency of the vehicle. Therefore, in order that the curable composition or the cured product thereof has a low specific gravity, the content of the filler with the high specific gravity as described above should be reduced. However, when the high specific gravity filler is reduced, the heat dissipation performance is lowered, so that it is difficult to prevent a fire or the like due to accumulated heat. That is, the low specific gravity and the high thermal conductivity are in a trade-off relationship with each other.

The curable composition according to one example of the present application, or the cured product thereof may simultaneously secure low specific gravity characteristics and heat dissipation characteristics even in the above trade-off relationship through an appropriate combination of filler components to be described below.

The curable composition according to one example of the present application may have a low shrinkage rate during or after curing. Through this, it is possible to prevent peeling or void generation, and the like that may occur during the application process. The shrinkage rate may be appropriately adjusted within a range capable of exhibiting the above-described effect, which may be, for example, less than 5%, less than 3%, or less than about 1%. Since the shrinkage rate is more advantageous as the value is lower, the lower limit is not particularly limited.

The curable composition according to one example of the present application, or the cured product thereof may have a low coefficient of thermal expansion (CTE). Through this, it is possible to prevent peeling or void generation, and the like that may occur during application or use processes. The coefficient of thermal expansion may be appropriately adjusted within a range capable of exhibiting the above-described effect, which may be, for example, less than 300 ppm/K, less than 250 ppm/K, less than 200 ppm/K, less than 150 ppm/K, or less than about 100 ppm/K. Since the lower the value of the coefficient of thermal expansion, it may be more advantageous, the lower limit is not particularly limited.

In the curable composition according to one example of the present application, or the cured product thereof, a 5% weight loss temperature in a thermogravimetric analysis (TGA) may be 400°C or more, or an 800°C remaining amount may be 70 wt% or more. The stability at a high temperatures may be further improved by such a property. In another example, the 800°C remaining amount may be about 75 wt% or more, about 80 wt% or more, about 85 wt% or more, or about 90 wt% or more. In another example, the 800°C remaining amount may be about 99 wt% or less. The thermogravimetric analysis (TGA) can be measured within the range of 25°C to 800°C at a heating rate of 20°C min under a nitrogen (N₂) atmosphere of 60 cm³/min. The thermogravimetric analysis (TGA) result can also be achieved through composition control of the curable composition. For example, the 800°C remaining amount is usually influenced by the type or ratio of the filler contained in the curable composition, and when an excessive amount of filler is included, the remaining amount increases.

The curable composition according to one example of the present application may comprise a polyol component. The polyol component may comprise a polyol in an amount of 55 wt% or more, 60 wt% or more, 65 wt% or more, 70 wt% or more, 75 wt% or more, 80 wt% or more, 85 wt% or more, 90 wt% or more, 95 wt% or more, 99 wt% or more, or 100 wt%, relative to the total weight.

The term polyol as used in the present application may mean a compound in which the lower limit of the number of hydroxyl groups is 2 or 3 or so per molecule. Also, the upper limit of the number of hydroxyl groups of the polyol is not particularly limited, but may be 10, 9, 8, 7, 6, 5, 4, or 3 or so per molecule. The number of hydroxyl groups of the polyol may be less than or equal to any one upper limit of the above-described upper limits. In addition, the number of hydroxy groups included in the polyol may also be in a range between any one lower limit of the above-described lower limits and any one upper limit of the above-described upper limits. The number of hydroxyl groups included in the polyol can be confirmed through ¹H NMR, but the number of hydroxyl groups can be confirmed based on a peak present in the 3 to 4 ppm region in ¹H NMR. Furthermore, the polyol may be called according to the number of hydroxyl groups, and may be called, for example, a bifunctional polyol (having two hydroxyl groups) and the like.

The curable composition according to one example of the present application may comprise a polyol component in a range of 1 part by weight or more to 80 parts by weight or less relative to 100 parts by weight of a filler component to be described below. The upper limit of the content of the polyol component may be 60 parts by weight, 50 parts by weight, 40 parts by weight, 30 parts by weight, 20 parts by weight, or 15 parts by weight or so relative to 100 parts by weight of the filler component, and the lower limit of the content of the polyol component may be 2 parts by weight, 3 parts by weight, 4 parts by weight, 5 parts by weight, 6 parts by weight, 7 parts by weight, 8 parts by weight, 9 parts by weight, or 10 parts by weight or so relative to 100 parts by weight of the filler component. The content of the polyol component may also be more than or equal to any one lower limit of the above-described lower limits, less than or equal to any one upper limit of the above-described upper limits, or in a range between any one low limit of the above-described lower limits and any one upper limit of the above-described upper limits. By controlling the content ratio of the polyol component and the filler component as above, it is possible to have compounding properties, to secure viscosity and thixotropy suitable for the process, and to form a cured product having an excellent thermal conductivity.

In the curable composition according to one example of the present application, the polyol component may comprise a first polyol that is a bifunctional polyol, and a second polyol with 3 functionality or more. By simultaneously comprising the first and second polyols as the polyol component, the curable composition can secure viscosity and thixotropy suitable for the process, can cure more densely upon curing to secure excellent curing properties, and can exhibit low adhesion force to a specific adherend, or can form a cured product capable of exhibiting low adhesion force.

In the curable composition according to one example of the present application, the polyol component is not particularly limited if it is used in the art, but, for example, it may include polyester polyol, polyether polyol, polycarbonate polyol, polyester polycarbonate polyol, polyolefin polyol, a conjugated diene polymer-based polyol, a castor oil-based polyol, a silicone-based polyol, a vinyl polymer-based polyol, and the like, depending on the skeleton structure. These can be used in one type alone, and can be used in combination of 2 or more types.

In the curable composition according to one example of the present application, the first or second polyol of the polyol component may be an oil-modified polyol or a non-oil-modified polyol.

The term oil-modified polyol as used in the present application means a polyol containing a linear or branched hydrocarbon group with 3 or more carbon atoms at the terminal. Accordingly, the polyol that does not contain the linear or branched hydrocarbon group with 3 or more carbon atoms at the terminal may be referred to as a non-oil-modified polyol in the present application. That is, the first or second polyol of the polyol component may contain a branched hydrocarbon chain with 3 or more carbon atoms at the terminal. It can be confirmed through ¹H NMR whether the first or second polyol contains the hydrocarbon group, where based on the peak present in the 4 to 5 ppm region in ¹H NMR, the existence and number of the hydrocarbon group can be identified. While the oil-modified polyol is applied and formed into a polyurethane material, it is possible to secure low adhesion force to a specific material while minimizing the used amount of adhesion force-reducing components such as plasticizers, and to have excellent compounding properties.

The lower limit of the number of carbon atoms of the linear or branched hydrocarbon group included in the terminal of the oil-modified polyol may be 4, 5, 6, 7, 8, 9, 10, 11, 12, 13, 14, 15, 16, or 17 or so. The number of carbon atoms may be more than or equal to any one lower limit of the above-described lower limits. The upper limit of the number of carbon atoms may also be 50, 49, 48, 47, 46, 45, 44, 43, 42, 41, 40, 39, 38, 37, 36, 35, 34, 33, 32, 31, 30, 29, 28, 27, 26, 25, 24, 23, 22, 21, 20 19, 18, 17, 16, 15, 14, 13, 12, 11, 10, 9, or 8 or so. The number of carbon atoms may be less than or equal to any one upper limit of the above-described upper limits. The number of carbon atoms may be in a range between any one lower limit of the above-described lower limits and any one upper limit of the above-described upper limits.

The linear or branched hydrocarbon group may or may not contain double bonds. In the case of including the double bonds, such double bonds may be conjugated double bonds or cis double bonds.

A specific type of the hydrocarbon group may be exemplified by an alkyl group, an alkenyl group, or an alkynyl group. In one example, the hydrocarbon group may be linked to the polyol compound via a carbonyl group or a carbonyloxy group, and in this case, the hydrocarbon group may be an alkylcarbonyl group, an alkenylcarbonyl group, an alkynylcarbonyl group, an alkylcarbonyloxy group, an alkenylcarbonyloxy group, or an alkynylcarbonyloxy group. Here, the number of carbon atoms of the alkyl group, alkenyl group or alkynyl group may also be more than or equal to any one lower limit of the above-described lower limits of the number of carbon atoms of the linear or branched hydrocarbon group, less than or equal to any one upper limit of the above-described upper limits of the linear or branched hydrocarbon group, or in a range between any one lower limit of the above-described lower limits of the number of carbon atoms of the linear or branched hydrocarbon group and any one upper limit of the above-described upper limits of the linear or branched hydrocarbon group.

The alkyl group, alkenyl group, or alkynyl group may be linear or branched, and may be optionally substituted with one substituent. When the substituent is present, the type of the substituent is not particularly limited, and for example, a halogen atom such as fluorine (F) may be exemplified as the substituent.

In one example, the hydrocarbon group may be included in a substituent of Formula 1 below.

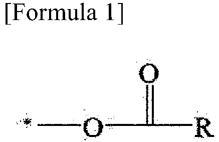

In Formula 1, R is a linear or branched hydrocarbon group.

In Formula 1, the symbol * means that the relevant moiety is linked to the polyol. Thus, the oxygen atom in the substituent of Formula 1 may be linked to the polyol.

A specific type of the hydrocarbon group, which is R in Formula 1, is as described above. Therefore, the contents on the number of carbon atoms, type, form, and substituent of the above-described hydrocarbon groups may be applied in the same manner as above.

The number of hydrocarbon groups included in the oil-modified polyol is not particularly limited. For example, the lower limit of the number of hydrocarbon groups included in the oil-modified polyol may be 1 or 2 per molecule of the compound. The upper limit of the number of hydrocarbon groups included in the oil-modified polyol may also be 10, 9, 8, 7, 6, 5, 4, 3, or 2 per molecule of the compound. The number of hydrocarbon groups may also be more than or equal to any one lower limit of the above-described lower limits, less than or equal to any one upper limit of the above-described upper limits, or in a range between any one lower limit of the above-described lower limits and any one upper limit of the above-described upper limits.

The oil-modified polyol may have various forms if it includes the hydroxy group and the hydrocarbon group.

In one example, the oil-modified polyol may be a compound in the form that at least some of hydrogen atoms of a hydrocarbon compound such as an alkane, alkene or alkyne are substituted with the hydroxy groups and/or the hydrocarbon groups. The number of carbon atoms in the hydrocarbon compound such as the alkane, alkene or alkyne may be, for example, 1 to 20, 1 to 16, 1 to 8, or 4 to 6. Such a hydrocarbon compound such as the alkane, alkene or alkyne may be linear, branched, or cyclic. In addition, the hydroxyl groups and/or hydrocarbon groups in the alkane, alkene, or alkyne may be substituted on the same carbon atom, or may also be substituted on different carbon atoms.

In another example, the oil-modified polyol may have a polyester skeleton or a polyether skeleton. In this case, the oil-modified polyol may be an oligomeric compound or a polymeric compound.

In one example, the oil-modified polyol having a polyester skeleton is a so-called polyester polyol, and may be a polyol having a structure in which the hydrocarbon group is linked to such a polyester polyol.

In addition, the oil-modified polyol having a polyether skeleton is a so-called polyether polyol, and may be a polyol having a structure in which the hydrocarbon group is linked to such a polyether polyol.

In one example, the polyester skeleton may be a so-called polycaprolactone skeleton, and the polyether skeleton may be a so-called polyalkylene skeleton.

In one example, the polyester skeleton may be a skeleton having a repeating unit represented by Formula 2 below.

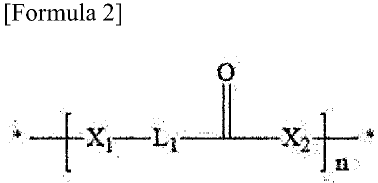

In Formula 2, X₁ and X₂ are each independently a single bond or an oxygen atom, L₁ may be an alkylene group or an alkylidene group, and n is an arbitrary number.

In the present application, the term single bond means a case where no atom exists at the relevant site.

In Formula 2, the alkylene group may be, in one example, an alkylene group having 2 to 20 carbon atoms, 4 to 20 carbon atoms, 4 to 16 carbon atoms, 4 to 12 carbon atoms, or 4 to 8 carbon atoms, which may be linear or branched.

In Formula 2, the alkylidene group may be, in one example, an alkylidene group having 1 to 20 carbon atoms, 4 to 20 carbon atoms, 4 to 16 carbon atoms, 4 to 12 carbon atoms, or 4 to 8 carbon atoms, which may be linear or branched.

In the present application, both the alkylene group and the alkylidene group mean divalent substituents formed by leaving two hydrogen atoms in the alkane. The alkylene group and the alkylidene group are distinct from each other that the alkylene group is a divalent substituent formed by leaving the two hydrogen atoms from different carbon atoms of the alkane, and the alkylidene group is a divalent substituent formed by leaving the two hydrogen atoms from one carbon atom of the alkane.

In one example, the polyester skeleton may be a polycaprolactone skeleton, and in this case, L₁ of Formula 2 above may be a linear alkylene group with 5 carbon atoms or a linear alkylidene group with 5 carbon atoms.

In Formula 2, n is an arbitrary number representing the number of repeating units. The lower limit of n above may be, for example, 1, 2, 3, 4, or 4.5 or so, and the upper limit may be 25, 20, 15, 10, or 5 or so. n above may also be more than or equal to any one lower limit of the above-described lower limits, less than or equal to any one upper limit of the above-described upper limits, or in a range between any one lower limit of the above-described lower limits and any one upper limit of the above-described upper limits.

The skeleton of Formula 2 may be a so-called carboxylic acid polyol skeleton or caprolactone polyol skeleton. Such a skeleton may be formed in a known manner, and for example, the skeleton of the carboxylic acid polyol may be formed by reacting a component comprising a carboxylic acid and a polyol (e.g., diol or triol, etc.), and the skeleton of the caprolactone polyol may be formed by reacting a component comprising a caprolactone and a polyol (e.g., diol or triol, etc.). The carboxylic acid may be a dicarboxylic acid.

In the oil-modified polyol having the skeleton of Formula 2, a hydroxyl group or the above-described hydrocarbon group may be present at the end of the skeleton of Formula 2.

In this case, the skeleton of Formula 2 above may be represented by Formula 3 below.

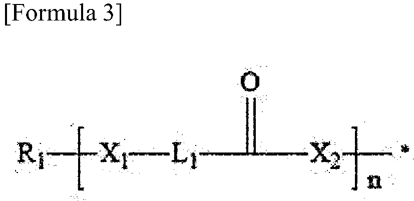

In Formula 3, X₁, X₂, L₁, and n are as defined in Formula 2, and R₁ may be a hydroxyl group or a substituent of Formula 4 below.

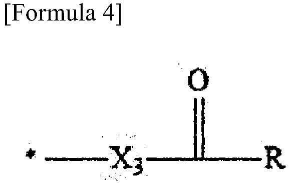

In Formula 4, X₃ is a single bond or an oxygen atom, and R is the same as R of Formula 1 above.

When R₁ in Formula 3 is a hydroxy group, X₁ may be a single bond, and X₂ may be an oxygen atom; and when R₁ is a substituent of Formula 4 above, either one of X₁ and X₃ may be a single bond, and the other may be an oxygen atom.

In the oil-modified polyol, the lower limit of the number of skeletons of Formula 2 or 3 above may be 1 or 2 or so, and the upper limit may be 10, 9, 8, 7, 6, 5, 4, 3, or 2 or so. The number of skeletons may also be more than or equal to any one lower limit of the above-described lower limits, less than or equal to any one upper limit of the above-described upper limits, or in a range between any one lower limit of the above-described lower limits and any one upper limit of the above-described upper limits.

The oil-modified polyol having the polyester skeleton may have a linear or branched structure.

Here, the linear structure is a structure in which a main chain including a skeleton of Formula 2 or 3 above is present and no other polymer chain is linked to the main chain, and the branched structure may be in a form that as a side chain, a chain including a skeleton of Formula 2 or 3 above is bonded to the main chain including a skeleton of Formula 2 or 3 above. Here, in the branched structure, the number of chains including the skeleton of Formula 2 or 3 above linked as the side chain may be, for example, 1 to 5, 1 to 4, 1 to 3, 1 to 2, or 1.

In one example, the oil-modified polyol having a polyester skeleton may be a compound in the form that at least some of hydrogen atoms of a hydrocarbon compound such as an alkane, alkene or alkyne are substituted with the hydroxyl group and/or the skeleton of Formula 3 above. The number of carbon atoms in the hydrocarbon compound such as the alkane, alkene or alkyne may be, for example, 1 to 20, 1 to 16, 1 to 8, or 4 to 6.

Such a hydrocarbon compound such as the alkane, alkene or alkyne may be linear, branched, or cyclic. In addition, the hydroxyl group and/or the skeleton of Formula 3 may be substituted on the same carbon atom in the alkane, alkene, or alkyne, or may also be substituted on different carbon atoms.

In one example, the polyether skeleton may be a skeleton having a repeating unit of Formula 5 below.

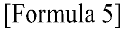

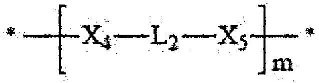

In Formula 5, X₄ and X₅ are each independently a single bond or an oxygen atom, L₂ may be an alkylene group or an alkylidene group, and m is an arbitrary number.

In Formula 5, the alkylene group may be, in one example, an alkylene group having 2 to 20 carbon atoms, 2 to 16 carbon atoms, 2 to 12 carbon atoms, 2 to 8 carbon atoms, or 2 to 4 carbon atoms, which may be linear or branched.

In Formula 5, the alkylidene group may be, in one example, an alkylene group having 1 to 20 carbon atoms, 1 to 16 carbon atoms, 1 to 12 carbon atoms, 1 to 8 carbon atoms, or 1 to 4 carbon atoms, which may be linear or branched.

The meanings of the alkylene group and the alkylidene group are as described above.

In Formula 5, m is an arbitrary number representing the number of repeating units, which may be, for example, a number within the range of 1 to 25.

In the oil-modified polyol having a skeleton of Formula 5, the hydroxyl group or the above-described hydrocarbon group may be present at the end of the skeleton of Formula 5 above.

In this case, the skeleton of Formula 5 may be represented by Formula 6 below.

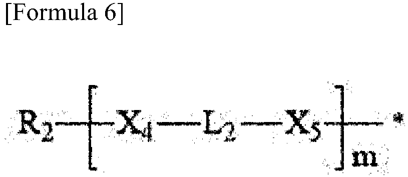

In Formula 6, X₄, X₅, L₂ and m are as defined in Formula 5, and R₂ may be a hydroxyl group or a substituent of Formula 7 below.

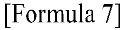

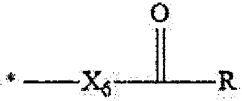

In Formula 7, X₆ is a single bond or an oxygen atom, and R is the same as R in Formula 1 above.

When R₂ in Formula 6 is a hydroxy group, X₄ is a single bond, and when R₂ is a substituent of Formula 7, either one of X₄ and X₆ is a single bond, and the other is an oxygen atom.

The oil-modified polyol may include one or more, or two or more skeletons of Formula 5 or 6 above. The skeleton of Formula 5 or 6 above may be included in the polyol compound in the number of 10 or less, 9 or less, 8 or less, 7 or less, 6 or less, 5 or less, 4 or less, 3 or less, or 2 or less.

The oil-modified polyol having the polyether skeleton may have a linear or branched structure.

Here, the linear structure may be a structure in which a main chain including a skeleton of Formula 5 or 6 above is present and no other polymer chain is linked to the main chain, and the branched structure may be in a form that as a side chain, a chain including a skeleton of Formula 5 or 6 above is bonded to a main chain including a skeleton of Formula 5 or 6 above. Here, in the branched structure, the number of chains containing the skeleton of Formula 5 or 6 above linked as side chains may be, for example, 1 to 5, 1 to 4, 1 to 3, 1 to 2, or 1.

In one example, the oil-modified polyol having the polyether skeleton may be a compound in the form that at least some of hydrogen atoms of a hydrocarbon compound such as an alkane, alkene or alkyne are substituted with a hydroxyl group and/or a skeleton of Formula 5 above. The number of carbon atoms in the hydrocarbon compound such as the alkane, alkene or alkyne may be, for example, 1 to 20, 1 to 16, 1 to 8, or 4 to 6.

Such a hydrocarbon compound such as the alkane, alkene or alkyne may be linear, branched, or cyclic. In addition, the hydroxy group and/or the skeleton of Formula 5 may be substituted on the same carbon atom in the alkane, alkene, or alkyne, or may also be substituted on different carbon atoms.

When the above-described oil-modified polyol is an oligomeric or polymeric compound, the relevant compound may have an appropriate level of molecular weight.

For example, the lower limit of the weight average molecular weight of the oligomeric or polymeric oil-modified polyol may be 100 g/mol, 200 g/mol, 300 g/mol, 400 g/mol, 500 g/mol, 600 g/mol, or 700 g/mol or so, and the upper limit may also be 5,000 g/mol, 4,500 g/mol, 4,000 g/mol, 3,500 g/mol, 3,000 g/mol, 2,500 g/mol, 2,000 g/mol, 1,500 g/mol, 1,000 g/mol, or 900 g/mol or so. The weight average molecular weight may also be more than or equal to any one lower limit of the above-described lower limits, less than or equal to any one upper limit of the above-described upper limits, or in a range between any one lower limit of the above-described lower limits and any one upper limit of the above-described upper limits.

By applying the oil-modified polyol as described above, it is possible to more effectively secure desired physical properties. In addition, by applying the above-described oil-modified polyol as the first polyol, it is possible to more effectively secure desired physical properties.

The oil-modified polyol may be synthesized through a known synthesis method. That is, the polyols may be prepared by reacting a compound capable of introducing the hydrocarbon group corresponding to the oil-modified portion with a known polyol or alcohol compound. Here, the polyol is as defined in the present application, and the alcohol compound means a compound containing one hydroxyl group per molecule. Here, the compound capable of introducing a hydrocarbon group may be exemplified by saturated or unsaturated fatty acids, and specifically, may be exemplified by butyric acid, caproic acid, 2-ethylhexanoic acid, caprylic acid, isononanoic acid, capric acid, lauric acid, myristic acid, palmitic acid, stearic acid, linoleic acid, or oleic acid, and the like, but is not limited thereto.

In addition, the type of polyol or alcohol compound reacting with the saturated or unsaturated fatty acid is not particularly limited, and for example, an appropriate type of general polyols to be described below may be applied, but is not limited thereto.

The non-oil-modified polyol may have various forms.

In one example, the non-oil-modified polyol may be a polyester polyol. As the polyester polyol, for example, a so-called carboxylic acid polyol or caprolactone polyol may be used.

In one example, the polyester polyol may be a skeleton having a repeating unit of Formula 8 below.

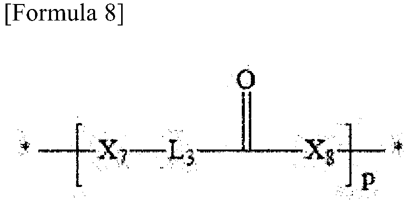

In Formula 8, X₇ and X₈ are each independently a single bond or an oxygen atom, L₃ may be an alkylene group or an alkylidene group, and p is an arbitrary number.

In Formula 8, the alkylidene group may be, in one example, an alkylene group having 1 to 20 carbon atoms, 4 to 20 carbon atoms, 4 to 16 carbon atoms, 4 to 12 carbon atoms, or 4 to 8 carbon atoms, which may be linear or branched.

In Formula 8, the alkylene group may be, in one example, an alkylene group having 2 to 20 carbon atoms, 4 to 20 carbon atoms, 4 to 16 carbon atoms, 4 to 12 carbon atoms, or 4 to 8 carbon atoms, which may be linear or branched.

When the polyester polyol is a polycaprolactone polyol, L₃ of Formula 8 above may be a linear alkylene group with 5 carbon atoms.

Also, in Formula 8 above, p is an arbitrary number representing the number of repeating units, which may be, for example, a number within the range of 1 to 25.

The polyester polyol having the skeleton of Formula 8 above may be a so-called carboxylic acid polyol or caprolactone polyol. Such a polyol compound may be formed by a known method, and for example, the carboxylic acid polyol may be formed by reacting a component including a carboxylic acid and a polyol (e.g., diol or triol, etc.), and the caprolactone polyol may be formed by reacting a component including caprolactone and a polyol (e.g., diol or triol, etc.). The carboxylic acid may be a dicarboxylic acid.

In the polyol compound having the skeleton of Formula 8 above, the hydroxyl group may be present at the end of the skeleton of Formula 8 above or at another site of the polyester polyol.

When the non-oil-modified polyol includes the skeleton of Formula 8 above, the lower limit of the number of the relevant skeletons may be 1 or 2 or so, and the upper limit may also be 10, 9, 8, 7, or 6, 5, 4, 3, 2, or 1 or so. The number of the skeletons more than or equal to any one lower limit of the above-described lower limits, less than or equal to any one upper limit of the above-described upper limits, or in a range between any one lower limit of the above-described lower limits and any one upper limit of the above-described upper limits.

The non-oil-modified polyol having the polyester backbone may have a linear or branched structure.

Here, the linear structure may be a structure in which a main chain including the skeleton of Formula 8 above is present and no other polymer chain is linked to the main chain, and the branched structure may be in a form that as side chains, chains including the skeleton of Formula 8 above are bonded to a main chain including the skeleton of Formula 8 above. In the branched structure, the number of chains containing the skeleton of Formula 8 above linked as the side chains may be, for example, 1 to 5, 1 to 4, 1 to 3, 1 to 2, or 1

In another example, as the non-oil-modified polyol, a polyol having a polycaprolactone polyol unit or an alkane diol unit; a polyol unit and a dicarboxylic acid unit may also be used. Such a polyol may be the above polycaprolactone polyol or alkane diol; or a mixture of a polyol and a dicarboxylic acid, or may be a reaction product thereof. That is, the polycaprolactone polyol unit, alkane diol unit, polyol unit, and dicarboxylic acid unit may be units derived from polycaprolactone polyol, alkane diol polyol, and dicarboxylic acid, respectively. At this time, the alkane diol may be exemplified by a diol compound with 1 to 20 carbon atoms, 4 to 20 carbon atoms, 4 to 16 carbon atoms, or 4 to 12 carbon atoms, such as 3-methyl-1,5-pentanediol, 1,9-nonanediol or 1,6-hexanediol. In addition, the polyol unit may be exemplified by an alkane with 1 to 20 carbon atoms, 4 to 20 carbon atoms, 4 to 16 carbon atoms or 4 to 12 carbon atoms substituted with 3 to 10, 3 to 9, 3 to 8, 3 to 7, 3 to 6, 3 to 5, or 3 to 4 hydroxyl groups, such as trimethylolpropane. In addition, the dicarboxylic acid may be exemplified by adipic acid, terephthalic acid, isophthalic acid, or sebacic acid, and the like. The polyol compound of this kind is known as, for example, product names of Kuraray's P-510, P-1010, P-2010, P-3010, P-4010, P-5010, P-6010, F-510, F-1010, F- 2010, F-3010, P-2011, P-520, P-2020, P-1012, P-2012, P-630, P-2030, P-2050, or N-2010.

When the above-described non-oil-modified polyol is an oligomeric or polymeric compound, the compound may have an appropriate level of molecular weight.

For example, the lower limit of the weight average molecular weight of the oligomeric or polymeric non-oil-modified polyol may be 100 g/mol, 200 g/mol, 300 g/mol, 400 g/mol, 500 g/mol, 600 g/mol, or 700 g/mol or so, the upper limit may also be 5,000 g/mol, 4,500 g/mol, 4,000 g/mol, 3,500 g/mol, 3,000 g/mol, 2,500 g/mol, 2,000 g/mol, 1,500 g /mol, 1,000 g/mol, or 900 g/mol or so. The weight average molecular weight may also be more than or equal to any one lower limit of the above-described lower limits, less than or equal to any one upper limit of the above-described upper limits, or in a range between any one lower limit of the above-described lower limits and any one upper limit of the above-described upper limits.

By applying the non-oil-modified polyol as described above, it is possible to more effectively secure desired physical properties. In addition, by applying the above-described oil-modified polyol as the first polyol and applying the above-described non-oil-modified polyol as the second polyol, it is possible to more effectively secure desired physical properties.

In the curable composition according to one example of the present application, the first or second polyol of the polyol component may be a polyester polyol having a polyester skeleton. The polyester polyol may be the oil-modified polyol or non-oil-modified polyol as described above. As the polyol component comprises a first polyol that is a polyester oil-modified polyol having a polyester skeleton, and a second polyol that is a non-oil-modified polyester polyol having a polyester skeleton, it is possible to more effectively secure desired physical properties.

In the curable composition according to one example of the present application, the first polyol of the polyol component may be an oligomeric or polymeric compound, and may have an appropriate level of molecular weight. The lower limit of the weight average molecular weight of the first polyol may be 100 g/mol, 200 g/mol, 300 g/mol, 400 g/mol, 500 g/mol, 600 g/mol, or 700 g/mol or so, and the upper limit may also be 2,000 g/mol, 1,500 g/mol, 1,000 g/mol, or 900 g/mol or so. The weight average molecular weight may also be more than or equal to any one lower limit of the above-described lower limits, less than or equal to any one upper limit of the above-described upper limits, or in a range between any one lower limit of the above-described lower limits and any one upper limit of the above-described upper limits.

In the curable composition according to one example of the present application, the second polyol of the polyol component may be an oligomeric or polymeric compound, and may have an appropriate level of molecular weight. The lower limit of the weight average molecular weight of the second polyol may be 500 g/mol, 600 g/mol, or 700 g/mol or so, and the upper limit may also be 5,000 g/mol, 4,500 g/mol, 4,000 g/mol, or 3,500 g /mol, 3,000 g/mol, 2,500 g/mol, 2,000 g/mol, 1,500 g/mol, 1,000 g/mol, or 900 g/mol or so. The weight average molecular weight may also be more than or equal to any one lower limit of the above-described lower limits, less than or equal to any one upper limit of the above-described upper limits, or in a range between any one lower limit of the above-described lower limits and any one upper limit of the above-described upper limits.

In the curable composition according to one example of the present application, by controlling the weight average molecular weights of the first polyol and the second polyol in the polyol component in the above range, it is possible to secure the viscosity and thixotropy suitable for a process.

In the curable composition according to one example of the present application, the polyol component may comprise the first polyol in an amount of more than 80 wt% relative to the total weight of the polyol component. The lower limit of the content of the first polyol in the polyol component may be 81 wt%, 82 wt%, 83 wt%, 84 wt%, 85 wt%, 86 wt%, 87 wt%, 88 wt%, 89 wt%, or 90 wt% or so, and the upper limit may be 97 wt%, 96 wt%, 95 wt%, 94 wt%, 93 wt%, 92 wt%, or 91 wt% or so, relative to the total weight of the polyol component. The content of the first polyol in the polyol component may also be more than or equal to any one lower limit of the above-described lower limits, less than or equal to any one upper limit of the above-described upper limits, or in a range between any one lower limit of the above-described lower limits and any one upper limit of the above-described upper limits.

By controlling the content of the first polyol as above, it can have excellent compounding properties in combination with a filler component to be described below; can secure viscosity and thixotropy suitable for the process; can cure more densely upon curing to secure excellent curing properties; and can exhibit low adhesion force to a specific adherend, or can form a cured product capable of exhibiting low adhesion force.

In the curable composition according to one example of the present application, a weight ratio (P_{A}/P_{B}) of the first polyol (P_{A}) to the second polyol (P_{B}) may be 5 or more. The lower limit of the weight ratio (P_{A}/P_{B}) may be 5.5, 6, 6.5, 7, 7.5, 8, 8.5, or 9 or so, and the upper limit may be 20, 18, 16, 14, 12, or 10 or so. The weight ratio (P_{A}/P_{B}) may also be more than or equal to any one lower limit of the above-described lower limits, less than or equal to any one upper limit of the above-described upper limits, or in a range between any one lower limit of the above-described lower limits and any one upper limit of the above-described upper limits.

By controlling the weight ratio (P_{A}/P_{B}) of the first polyol (P_{A}) to the second polyol (P_{B}) as above, it can have excellent compounding properties in combination with a filler component to be described below; can secure viscosity and thixotropy suitable for the process; can cure more densely upon curing to secure excellent curing properties; and can exhibit low adhesion force to a specific adherend, or can form a cured product capable of exhibiting low adhesion force. Particularly, as the polyol component of the curable composition controls the weight ratio (P_{A}/P_{B}) of the first polyol (P_{A}) to the second polyol (P_{B}) as above, it can exhibit low adhesion force to both PET and aluminum, or can form a cured product capable of exhibiting low adhesion force.

In the curable composition according to one example of the present application, the first polyol may have an OH% in a range of 3 or more to 20 or less. The lower limit of OH% of the first polyol may be 3.5, 4, 4.5, 5, 5.5, 6, 6.5, 7, or 7.5, and the upper limit may be 18, 16, 14, 12, or 10. The OH% of the first polyol may also be more than or equal to any one lower limit of the above-described lower limits, less than or equal to any one upper limit of the above-described upper limits, or in a range between any one lower limit of the above-described lower limits and any upper limit of the above-described upper limits. In addition, when the OH% of the first polyol satisfies the above range, the cured product of the curable composition having appropriate hardness without being brittle can be secured.

The term OH% of polyol as used in the present application may mean the percentage of the weight of the hydroxyl group (-OH) included in the polyol corresponding to 1 mol relative to the weight of the polyol corresponding to 1 mol.

In the curable composition according to one example of the present application, the second polyol may have an OH% in a range of 0.5 or more to 5 or less. The lower limit of the OH% of the second polyol may be 0.75, 0.8, 0.85, 0.9, 0.95, 1, 1.25, 1.5, 1.75, 2, 2.25, or 2.5, and the upper limit may be 4.5, 4, 3.5, or 3. The OH% of the second polyol may also be more than or equal to any one lower limit of the above-described lower limits, less than or equal to any one upper limit of the above-described upper limits, or in a range between any one lower limit of the above-described lower limits and any upper limit of the above-described upper limits. In addition, when the OH% of the second polyol satisfies the above range, the cured product of the curable composition having appropriate hardness without being brittle can be secured.

In the curable composition according to one example of the present application, the polyol component may further comprise other polyols different from the first polyol and the second polyol. The other polyols may be an oil-modified polyol or non-oil-modified polyol as described above, or a mixture thereof.

The curable composition according to one example of the present application may comprise a filler component. The curable composition may secure viscosity and thixotropy suitable for the process through a combination of the above-described polyol component and the filler component.

The curable composition according to one example of the present application may have a viscosity of 400 kcP or less at 25°C measured under a shear rate condition of 2.4 s⁻¹. The upper limit of the viscosity of the curable composition may be 390 kcP, 380 kcP, 370 kcP, 360 kcP, 350 kcP, 340 kcP, 330 kcP, 320 kcP, 310 kcP, or 300 kcP or so, and the lower limit may be 100 kcP, 105 kcP, or 110 kcP, 115 kcP, 120 kcP, 125 kcP, 130 kcP, or 135 kcP or so. The viscosity of the curable composition may also be more than or equal to any one lower limit of the above-described lower limits, less than or equal to any one upper limit of the above-described upper limits, or in a range between any one lower limit of the above-described lower limits and any one upper limit of the above-described upper limits.

The curable composition according to one example of the present application may have a thixotropic index (T.I.) of 5 or less according to General Equation 1 below. The upper limit of the thixotropic index of the curable composition may be 4.9, 4.8, 4.7, 4.6, 4.5, 4.4, 4.3, 4.2, 4.1, or 4 or so, and the lower limit may be 1.5, 1.6, 1.7, 1.8, 1.9, 2.0, 2.1, 2.2, 2.3, 2.4, 2.5, 2.6, or 2.7 or so. The thixotropic index of the curable composition may also be more than or equal to any one lower limit of the above-described lower limits, less than or equal to any one upper limit of the above-described upper limits, or in a range between any one lower limit of the above-described lower limits and any one upper limit of the above-described upper limits. [General equation 1] $Thixotropic Index \left(T.I.\right) = {V}_{1} / {V}_{2}$

In General Equation 1, V₁ is the viscosity of the curable composition measured under conditions of 25°C and 0.24 s⁻¹, and V₂ is the viscosity of the curable composition measured under conditions of 25°C and 2.4 s⁻¹.

The curable composition according to one example of the present application may comprise a filler component in a range of 70 wt% or more to 98 wt% or less relative to the total weight. The lower limit of the content of the filler component may be 72 wt%, 74 wt%, 76 wt%, 78 wt%, 80 wt%, 82 wt%, 84 wt%, or 86 wt% or so relative to the total weight of the curable composition, and the upper limit of the content of the filler component may be 97 wt%, 96 wt%, 95 wt%, 94 wt%, 93 wt%, 92 wt%, or 91 wt% relative to the total weight of the curable composition. The content of the filler component may also be more than or equal to any one lower limit of the above-described lower limits, less than or equal to any one upper limit of the above-described upper limits, or in a range between any one lower limit of the above-described lower limits and any one upper limit of the above-described upper limits. By controlling the content of the filler component as above, it is possible to form a cured product having excellent thermal conductivity while having viscosity and thixotropy suitable for the process.

In the curable composition according to one example of the present application, the filler component may comprise a filler. The type, shape and size, and the like of the filler are not particularly limited if it is used in the art. Also, the filler component may comprise one, or two or more fillers. In addition, even if the same type filler is used, the filler component may be a mixture of fillers having different shapes or sphericity degrees, or a mixture of fillers having different average particle diameters. For example, the filler component may be a mixture of aluminum hydroxide and aluminum oxide (alumina), and the shapes and average particle diameters of the aluminum hydroxide and aluminum oxide may be different from each other.

In the present application, the particle average particle diameter of the filler is the D50 particle diameter of the filler, which is the particle diameter measured by Marvern's MASTERSIZER3000 equipment in accordance with ISO-13320 standard. Upon measurement, distilled water was used as a solvent. The incident laser is scattered by the fillers dispersed in the solvent, and the values of the intensity and directionality of the scattered laser vary depending on the size of the filler, which are analyzed using the Mie theory, whereby the D50 particle diameter can be obtained. Through the above analysis, the distribution can be obtained through conversion to the diameter of a sphere having the same volume as the dispersed fillers, and the particle diameter can be evaluated by obtaining the D50 value, which is the median value of the distribution.

In the present application, the spherical shape of the filler may mean that the sphericity is about 0.9 or more, and the non-spherical shape may mean that the sphericity is less than about 0.9. The sphericity can be confirmed through the particle shape analysis of the filler. Specifically, the sphericity of the filler, which is a three-dimensional particle, can be defined as a ratio (S'/S) of a surface area (S) of a particle and a surface area (S') of a sphere having the same volume of the particle. For real particles, circularity is generally used. After obtaining a two-dimensional image of a real particle, the circularity is expressed as a ratio of the boundary (P) of the image and the boundary of a circle having the same image and the same area (A), and is obtained by the following equation. <Circularity Equation> $Circularity = 4 πA / {P}^{2}$

The circularity is indicated by a value ranging from 0 to 1, where a perfect circle has a value of 1, and the more irregular the shape of the particle, it has a value lower than 1. In the present application, the sphericity value may be measured as an average value of circularity measured by Marvern's particle shape analysis equipment (FPIA-3000).

In the curable composition according to one example of the present application, the filler component may comprise a first filler having a specific gravity of 3 or less and a second filler having a specific gravity of more than 3. In the present application, the specific gravity of the filler may be based on a value measured by the density measurement method of JIS Z2512 (2012). The curable composition may simultaneously secure low specific gravity characteristics and heat dissipation characteristics by comprising the first filler and the second filler. The lower limit of the specific gravity of the first filler is not particularly limited, but may be 0.5, 0.6, or 0.7 or so, and the specific gravity of the first filler may be in a range between 3 or less and any one lower limit of the above-described lower limits. Also, the upper limit of the specific gravity of the second filler is not particularly limited, but may be 30, 28, 26, 24, 22, or 20 or so, and the specific gravity of the second filler may be in a range between 3 or more to any one upper limit of the above-described upper limits. In addition, the specific gravity of the second filler may be in a range between 3.1 or more to any one upper limit of the above-described upper limits.

In the curable composition according to one example of the present application, the filler component may comprise the first filler in a range of 10 wt% or more to 80 wt% relative to the total weight of the curable composition. The upper limit of the content of the first filler may be 75 wt%, 70 wt%, 65 wt%, 60 wt%, 55 wt%, or 50 wt% or so relative to the total weight of the curable composition, and the lower limit of the content of the first filler may be 11 wt%, 12 wt%, 13 wt%, 14 wt%, 15 wt%, or 16 wt% or so relative to the total weight of the curable composition. The content of the first filler may also be more than or equal to any one lower limit of the above-described lower limits, less than or equal to any one upper limit of the above-described upper limits, or in a range between any one lower limit of the above-described lower limits and any one upper limit of the above-described upper limits. By controlling the content of the first filler as above, it is possible to simultaneously secure low specific gravity characteristics and heat dissipation characteristics, and to prevent a rapid increase in adhesion force even in a thermal shock test according to Mil-Std-883 Method 1010 or JEDEC JESD22-A104. In addition, by controlling the content of the first filler as above, the result measured according to UL 94 V Test can secure Grade V-0 even when the halogen element-containing flame retardant and the phosphorus (P) element-containing flame retardant are not substantially included.

In the curable composition according to one example of the present application, the first filler may be a metal hydroxide. The type of the metal hydroxide is not particularly limited, but may comprise one or more selected from the group consisting of aluminum hydroxide and magnesium hydroxide.

In the curable composition according to one example of the present application, for example, the first filler may have an average particle diameter of 60 µm or less while being a metal hydroxide. The lower limit of the average particle diameter of the first filler is not particularly limited, but may be 0.1 µm, 0.5 µm, or 1 µm. The average particle diameter of the first filler may be in a range between 60 µm or less to any one lower limit of the above-described lower limits. By controlling the average particle diameter of the first filler within the above range, it is possible to simultaneously secure low specific gravity characteristics and heat dissipation characteristics, and to exhibit ejection properties and thixotropy suitable for the process.

In the curable composition according to one example of the present application, the first filler may comprise one, or two or more fillers having an average particle diameter of 60 µm or less. For example, the first filler may comprise a metal hydroxide having an average particle diameter of 1 µm or so, or may comprise a filler having an average particle diameter of 1 µm or so, and a metal hydroxide having an average particle diameter of 50 µm or so.

In the curable composition according to one example of the present application, the first filler may comprise a first metal hydroxide (O₁) having an average particle diameter in a range between any one lower limit of the lower limits of the particle average particle diameter of the first filler and 10 µm or less, and the second metal hydroxide (O₂) having an average particle diameter of 60 µm or less to more than 10 µm. As the first filler comprises the first metal hydroxide and the second metal hydroxide, it is possible to simultaneously secure low specific gravity characteristics and heat dissipation characteristics, and to exhibit ejection properties and thixotropy suitable for the process.

In the curable composition according to one example of the present application, the weight ratio (O₁/O₂) of the first metal hydroxide (O₁) to the second metal hydroxide (O₂) may be in the range of 0.1 to 2. The upper limit of the weight ratio (O₁/O₂) may be 1.8, 1.6, 1.4, 1.2, or 1 or so, and the lower limit of the weight ratio (O₁/O₂) may be 0.2, 0.3, 0.4, 0.5, 0.6, 0.7, or 0.8 or so. The weight ratio (O₁/O₂) may also be more than or equal to any one lower limit of the above-described lower limits, less than or equal to any one upper limit of the above-described upper limits, or in a range between any one lower limit of the above-described lower limits and any one upper limit of the above-described upper limits. When the first filler satisfies the weight ratio (O₁/O₂) of the first metal hydroxide (O₁) to the second metal hydroxide (O₂) in the above range, it is possible to simultaneously secure low specific gravity characteristics and heat dissipation characteristics, and to exhibit ejection properties and thixotropy suitable for the process.

In the curable composition according to one example of the present application, the ratio (D₁/D₂) of the average particle diameter (D₁) of the first metal hydroxide to the average particle diameter (D₂) of the second metal hydroxide may be in the range of 0.005 to 0.1. The upper limit of the average particle diameter ratio (D₁/D₂) may be 0.09, 0.08, 0.07, or 0.06 or so, and the lower limit of the average particle diameter ratio (D₁/D₂) may be 0.01, 0.015, or 0.02 or so. The average particle diameter ratio (D₁/D₂) may also be more than or equal to any one lower limit of the above-described lower limits, less than or equal to any one upper limit of the above-described upper limits, or in a range between any one lower limit of the above-described lower limits and any one upper limit of the above-described upper limits. When the average particle diameter ratio (D₁/D₂) is satisfied within the above range, it is possible to simultaneously secure low specific gravity characteristics and heat dissipation characteristics, and to exhibit ejection properties and thixotropy suitable for the process.

In the curable composition according to one example of the present application, in some cases, the first filler may comprise one, or two or more fillers having an average particle diameter of more than 60 µm to 200 µm while being a metal hydroxide. Also, the first filler may comprise one, or two or more fillers having an average particle diameter of 0.1 µm or more to 60 µm or less while being a metal hydroxide. In addition, the first filler may comprise a filler having an average particle diameter of more than 60 µm to 200 µm while being a metal hydroxide, and a filler having an average particle diameter of 0.1 µm or more to 60 µm or less by mixing them in an appropriate ratio.

In the curable composition according to one example of the present application, the filler component may comprise the second filler in a range of 50 to 800 parts by weight relative to 100 parts by weight of the first filler. The upper limit of the content of the second filler may be 750 parts by weight, 700 parts by weight, 650 parts by weight, 600 parts by weight, 550 parts by weight, or 500 parts by weight or so relative to 100 parts by weight of the first filler, and the lower limit of the content of the second filler may be 55 parts by weight, 60 parts by weight, 65 parts by weight, 70 parts by weight, 75 parts by weight, or 80 parts by weight or so relative to 100 parts by weight of the first filler. The content of the second filler may also be more than any one lower limit of the above-described lower limits, less than or equal to any one upper limit of the above-described upper limits, or in a range between any one lower limit of the above-described lower limits and any one upper limit of the above-described upper limits. By controlling the content of the second filler as above, it is possible to simultaneously secure low specific gravity characteristics and heat dissipation characteristics.

In the curable composition according to one example of the present application, the second filler may comprise one or more selected from the group consisting of aluminum oxide, magnesium oxide, beryllium oxide, titanium oxide, silicon nitride, aluminum nitride, silicon carbide, copper, silver, iron, and titanium.

In the curable composition according to one example of the present application, the second filler may comprise a filler 2A having an average particle diameter of 65 µm or more while being limited to the above-described types. The upper limit of the average particle diameter of the filler 2A is not particularly limited, but may be 200 µm, 180 µm, 160 µm, 140 µm, 120 µm, 100 µm, or 80 µm or so. The average particle diameter of the filler 2A may be in a range from 65 µm or more to any one upper limit of the above-described upper limits. As the second filler comprises the filler 2A having an average particle diameter in the above range, it is possible to simultaneously secure low specific gravity characteristics and heat dissipation characteristics, and to exhibit ejection properties suitable for the process.

In the curable composition according to one example of the present application, when the average particle diameter of the first filler is 60 µm or less, as described above and the second filler comprises the filler 2A, it is possible to simultaneously secure more excellent low specific gravity characteristics and heat dissipation characteristics, and to exhibit ejection properties and thixotropy suitable for the process.

In the curable composition according to one example of the present application, the second filler may further comprise a filler 2B having an average particle diameter of less than 65 µm to 10 µm or more. As the second filler further comprises the filler 2B, it is possible to secure excellent heat dissipation characteristics.

In the curable composition according to one example of the present application, the second filler may comprise a filler 2A and a filler 2B, where the weight ratio (X_{2A}/X_{2B}) of the filler 2A (X_{2A}) and the filler 2B (X_{2B}) may be in a range of 1 to 10. The upper limit of the weight ratio (X_{2A}/X_{2B}) may be 9, 8, 7, or 6 or so, and the lower limit of the weight ratio (X_{2A}/X_{2B}) may be 2, 3, 4, or 5 or so. The weight ratio (X_{2A}/X_{2B}) may also be more than or equal to any one lower limit of the above-described lower limits, less than or equal to any one upper limit of the above-described upper limits, or in a range between any one lower limit of the above-described lower limits and any one upper limit of the above-described upper limits. When the second filler satisfies the weight ratio (X_{2A}/X_{2B}) of the filler 2A (X_{2A}) and the filler 2B (X_{2B}) within the above range, it is possible to simultaneously secure low specific gravity characteristics and heat dissipation characteristics, and to exhibit ejection properties and thixotropy suitable for the process.

In the curable composition according to one example of the present application, the second filler may comprise a filler 2A and a filler 2B, where the ratio (D_{2A}/D_{2B}) of the average particle diameter (D_{2A}) of the filler 2A to the average particle diameter (D_{2B}) of the filler 2B may be in a range of 1 to 10. The upper limit of the average particle diameter ratio (D_{2A}/D_{2B}) may be 9, 8, 7, 6, 5, or 4 or so, and the lower limit of the average particle diameter ratio (D_{2A}/D_{2B}) may be 1.5, 2, 2.5, or 3 or so. When the average particle diameter ratio (D_{2A}/D_{2B}) is satisfied within the above range, it is possible to simultaneously secure low specific gravity characteristics and heat dissipation characteristics, and to exhibit ejection properties and thixotropy suitable for the process.

In the curable composition according to one example of the present application, in some cases, the second filler may comprise a filler 2C having an average particle diameter of less than 10 µm while being limited to the above-mentioned types. The lower limit of the average particle diameter of the filler 2C is not particularly limited, but may be 0.01 µm, 0.05 µm, 0.1 µm, 0.5 µm, or 1 µm or so. The average particle diameter of the filler 2C may be in a range between less than 10 µm to any one lower limit of the above-described lower limits.

In the curable composition according to one example of the present application, one or more from the group consisting of the first filler and the second filler may be a thermally conductive filler. The thermally conductive filler may mean a filler in which the lower limit of its own thermal conductivity is 0.1 W/mK, 0.5 W/mK, 1 W/mK, 5 W/mK, 10 W/mK, or 15 W/mK or so, or the upper limit of its own thermal conductivity is not particularly limited, but is 400 W/mK, 380 W/mK, 350 W/mK, 320 W/mK, or 300 W/mK or so, and the own thermal conductivity is in a range between any one lower limit of the above-described lower limits and any one upper limit of the above-described upper limits. At this time, the own thermal conductivity of the filler may be measured according to ASTM E1461.

The lower limit of the thermal conductivity of the first filler may be 0.1 W/mK, 0.5 W/mK, 1 W/mK, 5 W/mK, 10 W/mK, or 15 W/mK or so, or the upper limit of its own thermal conductivity is not particularly limited, but may be 400 W/mK, 380 W/mK, 350 W/mK, 320 W/mK, or 300 W/mK or so. The thermal conductivity of the first filler may also be more than or equal to any one lower limit of the above-described lower limits, less than or equal to any one upper limit of the above-described upper limits, or in a range between any one lower limit of the above-described lower limits and any one upper limit of the above-described upper limits.

The lower limit of the thermal conductivity of the second filler may be 1 W/mK, 5 W/mK, 10 W/mK, or 15 W/mK or so, or the upper limit of the own thermal conductivity is not particularly limited, but may be 400 W/mK, 380 W/mK, 350 W/mK, 320 W/mK, or 300 W/mK or so. The thermal conductivity of the first filler may also be more than or equal to any one lower limit of the above-described lower limits, less than or equal to any one upper limit of the above-described upper limits, or in a range between any one lower limit of the above-described lower limits and any one upper limit of the above-described upper limits.

In the curable composition according to one example of the present application, the filler component may further comprise a third filler different from the first filler and the second filler. The third filler may be a thermally conductive filler. Also, the type of the third filler is not particularly limited, but may comprise one or more selected from the group consisting of a metal oxide filler such as aluminum oxide (alumina), magnesium oxide, beryllium oxide, or titanium oxide; a metal hydroxide filler such as aluminum hydroxide or magnesium hydroxide; a nitride filler such as boron nitride, silicon nitride, or aluminum nitride; a carbide filler such as silicon carbide; a metal filler such as copper, silver, iron, aluminum or nickel; and a metal alloy filler. In addition, the shape and size, and the like of the third filler are not particularly limited if the filler is used in the art.

The curable composition according to one example of the present application may further comprise one, or two or more additives exemplified below as necessary to secure additional physical properties. However, the additives are sufficient if they are generally usable in the art, and are not necessarily limited to the additives exemplified below.

The curable composition according to one example of the present application may further comprise a plasticizer. The type of plasticizer is not particularly limited, but for example, one or more may be selected from a phthalic acid compound, a phosphoric acid compound, an adipic acid compound, a sebacic acid compound, a citric acid compound, a glycolic acid compound, a trimellitic acid compound, a polyester compound, an epoxidized soybean oil, a chlorinated paraffin, a chlorinated fatty acid ester, a fatty acid compound, a compound having a saturated aliphatic chain substituted with a sulfonic acid group to which a phenyl group is coupled (e.g., LANXESS' mesamoll), and a vegetable oil, and used.

As the phthalic acid compound, one or more of dimethyl phthalate, diethyl phthalate, dibutyl phthalate, dihexyl phthalate, di-n-octyl phthalate, di-2-ethylhexyl phthalate, diisooctyl phthalate, dicapryl phthalate, dinonyl phthalate, diisononyl phthalate, didecyl phthalate, diundecyl phthalate, dilauryl phthalate, ditridecyl phthalate, dibenzyl phthalate, dicyclohexyl phthalate, butyl benzyl phthalate, octyl decyl phthalate, butyl octyl phthalate, octyl benzyl phthalate, n-hexyl n-decyl phthalate, n-octyl phthalate and n-decyl phthalate may be used. As the phosphoric acid compound, one or more of tricresyl phosphate, trioctyl phosphate, triphenyl phosphate, octyl diphenyl phosphate, cresyl diphenyl phosphate and trichloroethyl phosphate may be used. As the adipic acid compound, one or more of dibutoxyethoxyethyl adipate (DBEEA), dioctyl adipate, diisooctyl adipate, di-n-octyl adipate, didecyl adipate, diisononyl adipate (DINA), diisodecyl adipate (DIDP), n-octyl n-decyl adipate, n-heptyl adipate and n-nonyl adipate may be used. As the sebacic acid compound, one or more of dibutyl sebacate, dioctyl sebacate, diisooctyl sebacate and butyl benzyl may be used. As the citric acid compound, one or more of triethyl citrate, acetyl triethyl citrate, tributyl citrate, acetyl tributyl citrate and acetyl trioctyl citrate may be used. As the glycolic acid compound, one or more of methyl phthalyl ethyl glycolate, ethyl phthalyl ethyl glycolate and butyl phthalyl ethyl glycolate may be used. As the trimellitic acid compound, one or more of trioctyl trimellitate and tri-n-octyl n-decyl trimellitate may be used. The polyester compound may be a reaction product of a diol selected from butane diol, ethylene glycol, propane 1,2-diol, propane 1,3-diol, polyethylene glycol, glycerol, a diacid (selected from adipic acid, succinic acid, and succinic anhydride) and a hydroxy acid (such as, hydroxystearic acid).

The curable composition according to one example of the present application may comprise a plasticizer in an amount of 0.1 part by weight or more to 2 parts by weight or less relative to 100 parts by weight of the filler component. The upper limit of the plasticizer content may be 1.9 parts by weight, 1.8 parts by weight, 1.7 parts by weight, 1.6 parts by weight, or 1.5 parts by weight or so relative to 100 parts by weight of the filler component, and the lower limit of the plasticizer content may be 0.2 parts by weight, 0.3 parts by weight, 0.4 parts by weight, 0.5 parts by weight, 0.6 parts by weight, or 0.7 parts by weight or so relative to 100 parts by weight of the filler component. The content of the plasticizer may also be more than or equal to any one lower limit of the above-described lower limits, less than or equal to any one upper limit of the above-described upper limits, or in a range between any one lower limit of the above-described lower limits and any one upper limit of the above-described upper limits.

The curable composition according to one example of the present application may further comprise a dispersant. As the dispersant, for example, polyamideamines and their salts, polycarboxylic acids and their salts, modified polyurethanes, modified polyesters, modified poly(meth)acrylates, (meth)acrylic copolymers, naphthalenesulfonic acid formalin condensates, polyoxyethylene alkyl phosphate esters, polyoxyethylene alkylamines and pigment derivatives, and the like may be used, but any dispersant known in the art may be used without limitation.

In addition, the curable composition according to one example of the present application may comprise a viscosity modifier, for example, a thixotropic agent, a diluent, or a coupling agent, and the like, if necessary, for controlling the viscosity, for example, increasing or decreasing the viscosity, or for controlling the viscosity according to shear force. The thixotropic agent may adjust the viscosity according to shear force. The usable thixotropic agent may be exemplified by fumed silica and the like. The diluent is generally used to lower the viscosity, and if it may exhibit such an action, various types of diluents known in the art may be used without limitation. In the case of a coupling agent, for example, it may be used to improve the dispersibility of a filler component (e.g., alumina, etc.), and if it can exhibit the above action, various types of those known in the art may be used without limitation.

The curable composition according to one example of the present application may further comprise a curing agent part reacting with polyol. In the following, a composition comprising the curable composition as a main part and a curing agent part at the same time will be referred to as a two-component curable composition and explained.

A two-component curable composition according to one example of the present application may comprise a main part and a curing agent part. The main part comprises a polyol component and a first filler component, and the curing agent part comprises an isocyanate component and a second filler component.

In the two-component curable composition according to one example of the present application, the curable composition according to one example of the present application as described above may be applied to the main part. That is, the contents of the polyol component of the above-described curable composition according to one example of the present application may be referred to, and the contents of the filler component of the curable composition may be referred to as the first filler component of the two-component curable composition.

In the two-component curable composition according to one example of the present application, at least some of the components participating in curing are physically separated and included. The two-component curable composition or the cured product thereof may have at least one of the following physical properties. The physical properties as described below are each independent, and any one physical property does not take precedence over another physical property, and at least one or two or more of the physical properties as described below may be satisfied. The physical properties as described below are caused by a combination of the respective components included in the curable composition or the cured product thereof.

The two-component curable composition according to one example of the present application, or the cured product thereof may exhibit low adhesion force to a specific adherend, or form a cured product capable of exhibiting low adhesion force. Such a curable composition may be the polyurethane composition. The polyurethane is known as an adhesive material capable of exhibiting excellent adhesion to various adherends. Therefore, as a method of making the polyurethane composition exhibit low adhesion force to an adherend, a method of introducing a component that lowers the adhesion force, such as a plasticizer, is usually used. When components of such a plasticizer and the like are applied, it is possible to lower the adhesion force of the polyurethane material, but there may be a problem that the relevant component deteriorates other physical properties which could be secured in the polyurethane, or it elutes out of the material during the use process of the polyurethane material. However, in the present application, the low adhesion force can also be achieved for polyurethane materials while minimizing the used amount of adhesion force reducing components such as plasticizers. Therefore, in the present application, it is possible to provide a material that solves the problem of high adhesion force that is not required depending on the use while taking the advantages of the polyurethane material.

The two-component curable composition according to one example of the present application, or the cured product thereof may have adhesion force to aluminum of 1 N/mm² or less. In another example, the upper limit of the adhesion force of the curable composition or the cured product to aluminum may also be 0.1 N/mm², 0.099 N/mm², 0.098 N/mm², 0.097 N/mm², 0.096 N/mm², 0.095 N/mm², 0.094 N/mm², 0.093 N/mm², 0.092 N/mm², 0.091 N/mm² or 0.09 N/mm². The adhesion force to aluminum of the curable composition or the cured product thereof may be less than or equal to any one of the above-described upper limits. In the present application, the lower limit of the adhesion force to aluminum is not particularly limited. In one example, the adhesion force to aluminum may be 0 N/mm² or more, or more than 0 N/mm². The curable composition may be a curable composition that the adhesion force to aluminum is not substantially measured, or may be a curable composition capable of forming a cured product that it is not substantially measured. Therefore, the adhesion force to aluminum may be less than or equal to any one of the above-described upper limits while being 0 N/mm² or more, or more than 0 N/mm². The adhesion force of the curable composition or the cured product thereof to aluminum can be measured in the manner described in Examples herein.

The two-component curable composition according to one example of the present application, or the cured product thereof may have adhesion force to polyester of 100 gf/cm or less. In another example, the upper limit of the adhesion force of the curable composition or the cured product to polyester may also be 99.9 gf/cm, 99.8 gf/cm, 99.7 gf/cm, 99.6 gf/cm, 99.5 gf/cm, 99.4 gf/cm, 99.3 gf/cm, 99.2 gf/cm, 99.1 gf/cm, or 99 gf/cm. The adhesion force of the curable composition or the cured product thereof to polyester may be equal to or less than any one of the above-described upper limits. In the present application, the lower limit of the adhesion force to the polyester is not particularly limited. In one example, the lower limit of the adhesion force of the curable composition or the cured product to the polyester may also be 0 gf/cm, 2 gf/cm, 4 gf/cm, 6 gf/cm, 8 gf/cm, 10 gf/cm, 12 gf/cm, 14 gf/cm, 16 gf/cm, 18 gf/cm, or 20 gf/cm or so. The curable composition or the cured product thereof may exhibit substantially no adhesion force to polyester. The adhesion force of the curable composition or the cured product thereof to polyester may also be in a range between any lower limit of the above-described lower limits and any one upper limit of the above-described upper limits. The adhesion force of the curable composition or the cured product thereof to polyester can be measured in the manner described in Examples herein.

The two-component curable composition according to one example of the present application, or the cured product thereof may exhibit excellent thermal conductivity properties. For example, the lower limit of the thermal conductivity of the curable composition or the cured product thereof may also be 2.0 W/mK, 2.1 W/mK, 2.2 W/mK, 2.3 W/mK, 2.4 W/mK, 2.5 W/mK, 2.6 W/mK, 2.7 W/mK, 2.8 W/mK, 2.9 W/mK, or 3 W/mK or so. The thermal conductivity may be more than or equal to any one lower limit of the above-described lower limits. The upper limit of the thermal conductivity is not particularly limited. For example, the upper limit of the thermal conductivity of the curable composition or the cured product thereof may also be 10 W/mK, 9 W/mK, 8 W/mK, 7 W/mK, 6 W/mK, 5 W/mK, or 4 W/mK or so. The thermal conductivity may be in a range between any one low limit of the above-described lower limits and any one upper limit of the above-described upper limits. The thermal conductivity of such a curable composition or the cured product thereof can be measured by the method disclosed in Examples to be described below.

The two-component curable composition according to one example of the present application, or the cured product thereof may also exhibit appropriate hardness. For example, if the hardness of the curable composition or the cured product thereof is too high, there may be a problem due to excessive brittleness. In addition, through the adjustment of the hardness of the curable composition or the cured product thereof, it is possible to secure impact resistance and vibration resistance, and to secure the durability of the product, according to the application purpose. The upper limit of the hardness of the curable composition or the cured product thereof in Shore OO type may be 100, 98, 96, 94, 92, or 90. The Shore OO type hardness may be less than or equal to any one upper limit of the above-described upper limits. The lower limit of the Shore OO type hardness may be 10, 15, 20, 25, 30, 35, 40, 45, 50, 55, 60, 65, 70, 75, or 80. The Shore OO type hardness may be more than or equal to any one lower limit of the above-described lower limits. The Shore OO type hardness may also be in a range between any one upper limit of the above-described upper limits and any one lower limit of the above-described lower limits. The hardness of such a curable composition or the cured product thereof can be measured by the method disclosed in Examples to be described below.

The two-component curable composition according to one example of the present application, or the cured product thereof may also exhibit appropriate flexibility. For example, as the flexibility of the curable composition or the cured product thereof is adjusted to a desired level, the application uses may be greatly expanded. For example, the upper limit of the curvature radius of the curable composition or the cured product thereof may be 20 mm, 19 mm, 18 mm, 17 mm, 16 mm, 15 mm, 14 mm, 13 mm, 12 mm, 11 mm, 10 mm, or 9 mm or so. The curvature radius may be less than or equal to any one upper limit of the above-described upper limits. The lower limit of the curvature radius may also be, for example, about 1 mm, 2 mm, 3 mm, 4 mm, 5 mm, 6 mm, or 7 mm or so. The curvature radius may be more than or equal to any one lower limit of the above-described lower limits. The curvature radius may also be in a range between any one upper limit of the above-described upper limits and any one lower limit of the above-described lower limits. The curvature radius of such a curable composition or the cured product thereof can be measured by the method disclosed in Examples to be described below.

The two-component curable composition according to one example of the present application, or the cured product thereof may have insulation properties. That is, the curable composition may have insulation properties and/or form a cured product having insulation properties. For example, in the curable composition or the cured product thereof, the lower limit of the dielectric breakdown voltage measured in accordance with ASTM D149 may be 3 kV/mm, 5 kV/mm, 7 kV/mm, 10 kV/mm, 15 kV/mm, or 20 kV/mm or so. The dielectric breakdown voltage may be more than or equal to any one lower limit of the above-described lower limits. The higher the value of the dielectric breakdown voltage, it seems to have excellent insulation properties, and thus the upper limit is not particularly limited, but considering the composition or the like of the curable composition, the upper limit of the dielectric breakdown voltage may be 50 kV/mm, 45 kV/mm. mm, 40 kV/mm, 35 kV/mm, or 30 kV/mm or so. The dielectric breakdown voltage may be less than or equal to any one upper limit of the above-described upper limits. Such a dielectric breakdown voltage can be controlled by adjusting the insulation properties of the curable composition, which can be achieved, for example, by applying an insulating filler in the composition. In general, among fillers, a ceramic filler is known as a component capable of securing insulation properties. In addition, if the cured product of the curable composition can secure electrical insulation properties as above, it is possible to secure stability while maintaining performance with respect to various materials, for example, a case or a battery cell included in a battery module.

The two-component curable composition according to one example of the present application, or the cured product thereof may have flame retardancy. The curable composition or the cured product thereof may exhibit Grade V-0 in the UL 94 V Test (Vertical Burning Test). Accordingly, it is possible to secure stability against fires and other accidents that are of concern depending on the application uses of the curable composition. Also, conventionally, in order to secure the flame retardancy, it was generally secured through a halogen element-containing flame retardant, a phosphorus element-containing flame retardant, and a combination thereof. However, the curable composition or the cured product thereof may have a result of Grade V-0 as measured according to UL 94 V Test through an appropriate combination of a polyol component and a filler component, which are described below, without substantially comprising a halogen element-containing flame retardant and a phosphorus (P) element-containing flame retardant.

In the two-component curable composition according to one example of the present application, or the cured product thereof, the combined content of halogen and phosphorus elements may be 0.3 wt% or less relative to the total content of the curable composition or the cured product. The upper limit of the combined content of the halogen and phosphorus elements may be 0.29 wt%, 0.28 wt%, 0.27 wt%, 0.26 wt%, 0.25 wt%, 0.24 wt%, 0.23 wt%, 0.22 wt%, 0.21%, or 0.2 wt% relative to the total content of the curable composition or the cured product. The combined content of the halogen and phosphorus elements may be less than or equal to any one upper limit of the above-described upper limits. The lower limit of the combined content of the halogen and phosphorus elements is not particularly limited, but may be 0 wt% (not included), or more than 0 wt% relative to the total content of the curable composition or the cured product. It can be confirmed that the curable composition or the cured product thereof does not substantially comprise a halogen element-containing flame retardant and a phosphorus element-containing flame retardant through the combined content of halogen and phosphorus elements. The combined content of the halogen and phosphorus elements may be more than or equal to any one lower limit of the above-described lower limits. The combined content of the halogen and phosphorus elements may also be in a range between any one upper limit of the above-described upper limits and any one lower limit of the above-described lower limits.

The halogen element content, the phosphorus element content, and the combined content of the halogen element and the phosphorus element in the two-component curable composition according to one example of the present application, or a cured product may be measured through an ICP analysis method. In the two-component curable composition according to one example of the present application, or the cured product, the halogen element content may be 0.3 wt% or less relative to the total content of the curable composition or the cured product. The upper limit of the halogen element content may be 0.29 wt%, 0.28 wt%, 0.27 wt%, 0.26 wt%, 0.25 wt%, 0.24 wt%, 0.23 wt%, 0.22 wt%, 0.21 wt%, or 0.2 wt% relative to the total content of the curable composition or the cured product. The halogen element content may be less than or equal to any one upper limit of the above-described upper limits. The lower limit of the halogen element content is not particularly limited, but may be 0 wt% (not included), or more than 0 wt% relative to the total content of the curable composition or the cured product. It can be confirmed that the curable composition or the cured product thereof does not substantially include a halogen element-containing flame retardant through the halogen element content. The halogen content may be more than or equal to any one lower limit of the above-described lower limits. The halogen content may also be in a range between any one upper limit of the above-described upper limits and any one lower limit of the above-described lower limits.

In the two-component curable composition according to one example of the present application, or the cured product thereof, the phosphorus element content may be 0.3 wt% or less relative to the total content of the curable composition or the cured product. The upper limit of the phosphorus element content may be 0.29 wt%, 0.28 wt%, 0.27 wt%, 0.26 wt%, 0.25 wt%, 0.24 wt%, 0.23 wt%, 0.22 wt%, 0.21 wt%, or 0.2 wt% relative to the total content of the curable composition or the cured product The phosphorus element content may be less than or equal to any one upper limit of the above-described upper limits. The lower limit of the phosphorus element content is not particularly limited, but may be 0 wt% (not included), or more than 0 wt% relative to the total content of the curable composition or the cured product. It can be confirmed that the curable composition or the cured product thereof does not substantially comprise a phosphorous element-containing flame retardant through the phosphorus element content. The phosphorus content may be more than or equal to any one lower limit of the above-described lower limits. The phosphorus content may also be in a range between any one upper limit of the above-described upper limits and any one lower limit of the above-described lower limits.

In the two-component curable composition according to one example of the present application, or the cured product thereof, the combined content of the halogen element-containing flame retardant and the phosphorus element-containing flame retardant may be 1 wt% or less relative to the total content of the curable composition or the cured material. The upper limit of the combined content of the halogen element-containing flame retardant and the phosphorus element-containing flame retardant may be 0.9 wt%, 0.8 wt%, 0.7 wt%, 0.6 wt%, 0.5 wt%, 0.4 wt%, 0.3 wt%, 0.2 wt%, 0.1 wt%, 0.01 wt%, or 0.001 wt%. The combined content of the halogen element-containing flame retardant and the phosphorus element-containing flame retardant may be less than or equal to any one upper limit of the above-described upper limits. The lower limit of the combined content of the halogen element-containing flame retardant and the phosphorus element-containing flame retardant is not particularly limited, but may be 0 wt% (not included), or more than 0 wt% relative to the total content of the curable composition or the cured product. The combined content of the halogen element-containing flame retardant and the phosphorus element-containing flame retardant may be more than or equal to any one lower limit of the above-described lower limits. The combined content of the halogen element-containing flame retardant and the phosphorus element-containing flame retardant may also be in a range between any one upper limit of the above-described upper limits and any one lower limit of the above-described lower limits.

In the two-component curable composition according to one example of the present application, or the cured product thereof, the content of the halogen element-containing flame retardant may be 1 wt% or less relative to the total content of the curable composition or the cured product. The upper limit of the content of the halogen element-containing flame retardant is 0.9 wt%, 0.8 wt%, 0.7 wt%, 0.6 wt%, 0.5 wt%, 0.4 wt%, 0.3 wt%, 0.2 wt%, 0.1 wt%, 0.01 wt%, or 0.001 wt% relative to the total content of the curable composition or the cured product. The content of the halogen element-containing flame retardant may be less than or equal to any one upper limit of the above-described upper limits. The lower limit of the content of the halogen element-containing flame retardant is not particularly limited, but may be 0 wt% (not included) or more than 0 wt% relative to the total content of the curable composition or the cured product. The content of the halogen element-containing flame retardant may be more than or equal to any one lower limit of the above-described lower limits. The content of the halogen element-containing flame retardant may also be in a range between any one upper limit of the above-described upper limits and any one lower limit of the above-described lower limits.

In the two-component curable composition according to one example of the present application, or the cured product thereof, the content of the phosphorus element-containing flame retardant may be 1 wt% or less relative to the total content of the curable composition or the cured product. The upper limit of the content of the phosphorus element-containing flame retardant may be 0.9 wt%, 0.8 wt%, 0.7 wt%, 0.6 wt%, 0.5 wt%, 0.4 wt%, 0.3 wt%, 0.2 wt%, 0.1 wt%, 0.01 wt%, or 0.001 wt% relative to the total content of the curable composition or the cured product. The content of the phosphorus element-containing flame retardant may be less than or equal to any one upper limit of the above-described upper limits. The lower limit of the content of the phosphorus element-containing flame retardant is not particularly limited, but may be 0 wt% (not included), or more than 0 wt% relative to the total content of the curable composition or the cured product. The content of the phosphorus element-containing flame retardant may be more than or equal to any one lower limit of the above-described lower limits. The content of the phosphorus element-containing flame retardant may also be in a range between any one upper limit of the above-described upper limits and any one lower limit of the above-described lower limits.

The two-component curable composition according to one example of the present application, or the cured product thereof may have a specific gravity of 3 or less. The upper limit of the specific gravity may be 2.99, 2.98, 2.97, or 2.96. The upper limit of the specific gravity may be less than or equal to any one upper limit of the above-described upper limits. Such a specific gravity can be achieved by applying a filler having a low specific gravity and/or applying a surface-treated filler. In addition, the lower limit of the specific gravity is not particularly limited because the lower the specific gravity, the more advantageous it is to reduce the weight of the applied product. For example, the specific gravity may be about 1.5 or more, or 2 or more. The specific gravity may be more than or equal to any one lower limit of the above-described lower limits. The specific gravity may also be in a range between any one upper limit of the above-described upper limits and any one lower limit of the above-described lower limits.

As described above, the two-component curable composition according to one example of the present application, or the cured product thereof can be used as a thermal interface material, and the like, and, for example, can rapidly dissipate heat generated when rapidly charging a battery to reduce the risk of fires or the like. However, in order to implement heat dissipation performance, a thermally conductive filler with a high specific gravity is generally applied thereto in excess, but in this case, the weight of the battery increases, and eventually the weight of the product to which the battery is applied also increases. Particularly, when applied to an electric vehicle, it may be disadvantageous to the fuel efficiency of the vehicle. Therefore, in order that the curable composition or the cured product thereof has a low specific gravity, the content of the filler with the high specific gravity as described above should be reduced. However, when the high specific gravity filler is reduced, the heat dissipation performance is lowered, so that it is difficult to prevent a fire or the like due to accumulated heat. That is, the low specific gravity and the high thermal conductivity are in a trade-off relationship with each other.

The two-component curable composition according to one example of the present application, or the cured product thereof may simultaneously secure low specific gravity characteristics and heat dissipation characteristics even in the above trade-off relationship through an appropriate combination of filler components to be described below.

The curable composition according to one example of the present application may have a low shrinkage rate during or after curing. Through this, it is possible to prevent peeling or void generation, and the like that may occur during the application process. The shrinkage rate may be appropriately adjusted within a range capable of exhibiting the above-described effect, which may be, for example, less than 5%, less than 3%, or less than about 1%. Since the shrinkage rate is more advantageous as the value is lower, the lower limit is not particularly limited.

The two-component curable composition according to one example of the present application, or the cured product thereof may have a low coefficient of thermal expansion (CTE). Through this, it is possible to prevent peeling or void generation, and the like that may occur during application or use processes. The coefficient of thermal expansion may be appropriately adjusted within a range capable of exhibiting the above-described effect, which may be, for example, less than 300 ppm/K, less than 250 ppm/K, less than 200 ppm/K, less than 150 ppm/K, or less than about 100 ppm/K. Since the lower the value of the coefficient of thermal expansion, it may be more advantageous, the lower limit is not particularly limited.

In the two-component curable composition according to one example of the present application, or the cured product thereof, a 5% weight loss temperature in a thermogravimetric analysis (TGA) may be 400°C or more, or an 800°C remaining amount may be 70 wt% or more. The stability at a high temperatures may be further improved by such a property. In another example, the 800°C remaining amount may be about 75 wt% or more, about 80 wt% or more, about 85 wt% or more, or about 90 wt% or more. In another example, the 800°C remaining amount may be about 99 wt% or less. The thermogravimetric analysis (TGA) can be measured within the range of 25°C to 800°C at a heating rate of 20°C/min under a nitrogen (N₂) atmosphere of 60 cm³/min. The thermogravimetric analysis (TGA) result can also be achieved through composition control of the curable composition. For example, the 800°C remaining amount is usually influenced by the type or ratio of the filler contained in the curable composition, and when an excessive amount of filler is included, the remaining amount increases.

In the two-component curable composition according to one example of the present application, the isocyanate component included in the curing agent part may comprise an isocyanate compound in an amount of 55 wt% or more, 60 wt% or more, 65 wt% or more, 70 wt% or more, 75 wt% or more, 80 wt% or more, 85 wt% or more, 90 wt% or more, 95 wt% or more, 99 wt% or more, or 100 wt% relative to the total weight.

The term isocyanate compound as used in the present application may mean a compound in which the lower limit of the number of isocyanate groups is 1 or 2 or so per molecule. Also, the upper limit of the isocyanate number in the isocyanate is not particularly limited, but may be 10, 9, 8, 7, 6, 5, 4, or 3 or so per molecule. The number of isocyanate groups included in the isocyanate compound may also be more than or equal to any one lower limit of the above-described lower limits, less than or equal to any one upper limit of the above-described upper limits, or in a range between any one lower limit of the above-described lower limits and any one upper limit of the above-described upper limits. In the present application, when the isocyanate compound has one isocyanate group per molecule, the isocyanate compound may be referred to as a monofunctional isocyanate compound. In addition, when the isocyanate compound has two or more isocyanate groups per molecule, the isocyanate compound may be referred to as a polyisocyanate compound. From the viewpoint that it is reacted with the polyol component in the main part to form a polyurethane resin, it may be appropriate that the isocyanate compound is the polyisocyanate compound. Furthermore, the isocyanate compound may be called according to the number of isocyanate groups, and may be called, for example, a bifunctional isocyanate compound or a diisocyanate compound (having two isocyanate groups), and the like.

In the two-component curable composition according to one example of the present application, the type of isocyanate compound is not particularly limited, but non-aromatic polyisocyanates containing no aromatic group may be used to secure desired physical properties. Also, in the two-component curable composition according to one example of the present application, when considering the combination of the polyol component included in the main composition, it may be more suitable to use as the isocyanate compound non-aromatic polyisocyanates with 3 or more isocyanate groups among non-aromatic polyisocyanates containing no aromatic group in order to secure desired physical properties.

As the polyisocyanate compound, for example, aliphatic polyisocyanates such as hexamethylene diisocyanate, trimethylhexamethylene diisocyanate, lysine diisocyanate, norbornane diisocyanate methyl, ethylene diisocyanate, propylene diisocyanate, or tetramethylene diisocyanate; alicyclic polyisocyanates such as transcyclohexane-1,4-diisocyanate, isophorone diisocyanate, bis(isocyanatemethyl)cyclohexane diisocyanate, or dicyclohexylmethane diisocyanate; or one or more carbodiimide-modified polyisocyanates or isocyanurate-modified polyisocyanates of the foregoing, and the like may be used. In addition, as the polyisocyanate, addition reaction products of the diisocyanate and polyol (for example, trimethylol propane, etc.) as described above may also be used. Furthermore, as the polyisocyanate compound, for example, trimers of the above-described diisocyanates may also be used. Furthermore, a mixture of two or more of the above-listed compounds may be used.

In the two-component curable composition according to one example of the present application, the curing agent part may comprise an isocyanate component in a range of 1 wt% to 10 wt% relative to the total weight of the curing agent part. The upper limit of the content of the isocyanate component may also be 9 wt%, 8 wt%, 7 wt%, or 6 wt% or so, and the lower limit of the content of the isocyanate component may be 1.5 wt%, 2 wt%, 2.5 wt%, 3 wt%, or 3.5 wt% or so, relative to the total weight of the curing agent part. The content of the isocyanate component may also be more than or equal to any one lower limit of the above-described lower limits, less than or equal to any one upper limit of the above-described upper limits, or in a range between any one lower limit of the above-described lower limits and any one upper limit of the above-described upper limits.

In the two-component curable composition according to one example of the present application, the curing agent part may comprise a second filler component. The curing agent part can secure viscosity and thixotropy suitable for the process through a combination of the above-described isocyanate component and the second filler component.

In the two-component curable composition according to one example of the present application, the curing agent part may have a viscosity of 390 kcP or less at 25°C measured under a shear rate condition of 2.4 s⁻¹. The upper limit of the viscosity of the curing agent part may be 380 kcP, 370 kcP, 360 kcP, 350 kcP, 340 kcP, 330 kcP, 320 kcP, 310 kcP, or 300 kcP or so, and the lower limit may be 90 kcP, 100 kcP, 105 kcP, 110 kcP, 115 kcP, 120 kcP, 125 kcP, 130 kcP, or 135 kcP or so. The viscosity of the curing agent part may also be more than or equal to any one lower limit of the above-described lower limits, less than or equal to any one upper limit of the above-described upper limits, or in a range between any one lower limit of the above-described lower limits and any one upper limit of the above-described upper limits.

In the two-component curable composition according to one example of the present application, the curing agent part may have a thixotropic index (T.I.) of 10 or less according to General Equation 2 below. The upper limit of the thixotropic index of the curing agent part may be 9, 8, or 7 or so, and the lower limit of the thixotropic index of the curing agent part may be 2.1, 2.2, 2.3, 2.4, 2.5, 2.6, 2.7, or 2.8 or so. The thixotropy index of the curing agent part may also be more than or equal to any one lower limit of the above-described lower limits, less than or equal to any one upper limit of the above-described upper limits, or in a range between any one lower limit of the above-described lower limits and any one upper limit of the above-described upper limits. [General equation 2] $Thixotropic Index \left(T.I.\right) = {V}_{3} / {V}_{4}$

In General Equation 2, V₃ is the viscosity of the curing agent part measured at 25°C and 0.24 s⁻¹, and V₄ is the viscosity of the curing agent part measured at 25°C and 2.4 s⁻¹.

In the two-component curable composition according to one example of the present application, the curing agent part may comprise a second filler component in a range of 1,000 parts by weight or more to3,000 parts by weight or less relative to 100 parts by weight of the isocyanate component. The lower limit of the content of the second filler component may be 1,100 parts by weight, 1,200 parts by weight, 1,300 parts by weight, 1,400 parts by weight, 1,500 parts by weight, 1,600 parts by weight, or 1,700 parts by weight or so relative to 100 parts by weight of the isocyanate component. The upper limit of the content of the second filler component may be 2,900 parts by weight, 2,800 parts by weight, 2,700 parts by weight, 2,600 parts by weight, 2,500 parts by weight, or 2,400 parts by weight or so relative to 100 parts by weight of the isocyanate component. The content of the second filler component may also be more than or equal to any one lower limit of the above-described lower limits, less than or equal to any one upper limit of the above-described upper limits, or in a range between any one lower limit of the above-described lower limits and any one upper limit of the above-described upper limits. By controlling the content of the second filler component as above, it is possible to form a cured product having excellent thermal conductivity while having viscosity and thixotropy suitable for the process.

In the two-component curable composition according to one example of the present application, the second filler component of the curing agent part may comprise a filler. The type, shape and size, and the like of the filler are not particularly limited if it is used in the art. Also, the filler component may comprise one, or two or more fillers. In addition, even if the same type filler is used, the filler component may be a mixture of fillers having different shapes or sphericity degrees, or a mixture of fillers having different average particle diameters.

In the two-component curable composition according to one example of the present application, the second filler component of the curing agent part may comprise a second filler having a specific gravity of more than 3. The upper limit of the specific gravity of the second filler is not particularly limited, but may be 30, 28, 26, 24, 22, or 20 or so. Also, the specific gravity of the second filler may be in a range between more than 3 and any one upper limit of the above-described upper limits. In addition, the specific gravity of the second filler may be in a range between 3.1 or more and any one upper limit of the above-described upper limits.

In the two-component curable composition according to one example of the present application, the second filler component of the curing agent part may comprise a first filler having a specific gravity of 3 or less, if necessary. The lower limit of the specific gravity of the first filler is not particularly limited, but may be 0.5, 0.6, or 0.7 or so, and the specific gravity of the first filler may be in a range between 3 or less and any one lower limit of the above-described lower limits.

In the two-component curable composition according to one example of the present application, the second filler component of the curing agent part may comprise one or more thermally conductive fillers. In addition, the type of filler included in the second filler component may comprise one or more selected from the group consisting of a metal oxide filler such as aluminum oxide (alumina), magnesium oxide, beryllium oxide, or titanium oxide; a metal hydroxide filler such as aluminum hydroxide or magnesium hydroxide; a nitride filler such as boron nitride, silicon nitride, or aluminum nitride; a carbide filler such as silicon carbide; a metal filler such as copper, silver, iron, aluminum or nickel; and a metal alloy filler. In addition, the shape and size, and the like of the third filler are not particularly limited if the filler is used in the art.

In the two-component curable composition according to one example of the present application, the curing agent part may further comprise one, or two or more additives exemplified below as necessary to secure additional physical properties. However, the additives are sufficient if they are generally usable in the art, and are not necessarily limited to the additives exemplified below.

In the two-component curable composition according to one example of the present application, the curing agent part may further comprise a plasticizer. The type of plasticizer is not particularly limited, but for example, one or more may be selected from a phthalic acid compound, a phosphoric acid compound, an adipic acid compound, a sebacic acid compound, a citric acid compound, a glycolic acid compound, a trimellitic acid compound, a polyester compound, an epoxidized soybean oil, a chlorinated paraffin, a chlorinated fatty acid ester, a fatty acid compound, a compound having a saturated aliphatic chain substituted with a sulfonic acid group to which a phenyl group is coupled (e.g., LANXESS' mesamoll), and a vegetable oil, and used.

As the phthalic acid compound, one or more of dimethyl phthalate, diethyl phthalate, dibutyl phthalate, dihexyl phthalate, di-n-octyl phthalate, di-2-ethylhexyl phthalate, diisooctyl phthalate, dicapryl phthalate, dinonyl phthalate, diisononyl phthalate, didecyl phthalate, diundecyl phthalate, dilauryl phthalate, ditridecyl phthalate, dibenzyl phthalate, dicyclohexyl phthalate, butyl benzyl phthalate, octyl decyl phthalate, butyl octyl phthalate, octyl benzyl phthalate, n-hexyl n-decyl phthalate, n-octyl phthalate and n-decyl phthalate may be used. As the phosphoric acid compound, one or more of tricresyl phosphate, trioctyl phosphate, triphenyl phosphate, octyl diphenyl phosphate, cresyl diphenyl phosphate and trichloroethyl phosphate may be used. As the adipic acid compound, one or more of dibutoxyethoxyethyl adipate (DBEEA), dioctyl adipate, diisooctyl adipate, di-n-octyl adipate, didecyl adipate, diisononyl adipate (DINA), diisodecyl adipate (DIDP), n-octyl n-decyl adipate, n-heptyl adipate and n-nonyl adipate may be used. As the sebacic acid compound, one or more of dibutyl sebacate, dioctyl sebacate, diisooctyl sebacate and butyl benzyl may be used. As the citric acid compound, one or more of triethyl citrate, acetyl triethyl citrate, tributyl citrate, acetyl tributyl citrate and acetyl trioctyl citrate may be used. As the glycolic acid compound, one or more of methyl phthalyl ethyl glycolate, ethyl phthalyl ethyl glycolate and butyl phthalyl ethyl glycolate may be used. As the trimellitic acid compound, one or more of trioctyl trimellitate and tri-n-octyl n-decyl trimellitate may be used. The polyester compound may be a reaction product of a diol selected from butane diol, ethylene glycol, propane 1,2-diol, propane 1,3-diol, polyethylene glycol, glycerol, a diacid (selected from adipic acid, succinic acid, and succinic anhydride) and a hydroxy acid (such as, hydroxystearic acid).

In the two-component curable composition according to one example of the present application, the curing agent part may comprise a plasticizer in an amount of 50 parts by weight or more to 200 parts by weight or less relative to 100 parts by weight of the isocyanate component. The upper limit of the content of the plasticizer may be 190 parts by weight, 180 parts by weight, 170 parts by weight, 160 parts by weight, 150 parts by weight, 140 parts by weight, 130 parts by weight, or 120 parts by weight or so relative to 100 parts by weight of the isocyanate component, and the lower limit of the content of the plasticizer may be 70 parts by weight, 80 parts by weight, or 90 parts by weight or so relative to 60 parts by weight of the isocyanate component. The content of the plasticizer may also be more than or equal to any one lower limit of the above-described lower limits, less than or equal to any one upper limit of the above-described upper limits, or in a range between any one lower limit of the above-described lower limits and any one upper limit of the above-described upper limits.

In the two-component curable composition according to one example of the present application, the curing agent part may further comprise a dispersant. As the dispersant, for example, polyamideamines and their salts, polycarboxylic acids and their salts, modified polyurethanes, modified polyesters, modified poly(meth)acrylates, (meth)acrylic copolymers, naphthalenesulfonic acid formalin condensates, polyoxyethylene alkyl phosphate esters, polyoxyethylene alkylamines and pigment derivatives, and the like may be used, but any dispersant known in the art may be used without limitation.

In the two-component curable composition according to one example of the present application, the curing agent part may comprise a viscosity modifier, for example, a thixotropic agent, a diluent, or a coupling agent, and the like, if necessary, for controlling the viscosity, for example, increasing or decreasing the viscosity, or for controlling the viscosity according to shear force. The thixotropic agent may adjust the viscosity according to shear force. The usable thixotropic agent may be exemplified by fumed silica and the like. The diluent is generally used to lower the viscosity, and if it may exhibit such an action, various types of diluents known in the art may be used without limitation. In the case of a coupling agent, for example, it may be used to improve the dispersibility of a filler component (e.g., alumina, etc.), and if it can exhibit the above action, various types of those known in the art may be used without limitation.

In the two-component curable composition according to one example of the present application, the combined content of the first filler component of the main part and the second filler component of the curing agent part may be included in a range of 70 wt% or more to 98 wt% or less relative to the total weight of the two-component curable composition. The lower limit of the combined content of the first filler component and the second filler component may be 72 wt%, 74 wt%, 76 wt%, 78 wt%, 80 wt%, 82 wt%, 84 wt%, or 86 wt% or so relative to the total weight of the two-component curable composition, and the upper limit of the combined content of the first filler component and the second filler component may be 97 wt%, 96 wt%, 95 wt%, 94 wt%, 93 wt%, 92 wt%, or 91 wt% relative to the total weight of the two-component curable composition. The combined content of the first filler component and the second filler component may also be more than any one lower limit of the above-described lower limits, less than or equal to any one upper limit of the above-described upper limits, or in a range between any one lower limit of the above-described lower limits and any one upper limit of the above-described upper limits. By controlling the combined content of the first filler component and the second filler component as above, it is possible to form a cured product having an excellent thermal conductivity while having viscosity and thixotropy suitable for the process.

In the two-component curable composition according to one example of the present application, one or more selected from the group consisting of the first filler component of the main part and the second filler component of the curing agent part may comprise a first filler having a specific gravity of 3 or less. The lower limit of the specific gravity of the first filler is not particularly limited, but may be 0.5, 0.6, or 0.7 or so, and the specific gravity of the first filler may be in a range between 3 or less and any one lower limit of the above-described lower limits.

In the two-component curable composition according to one example of the present application, the first filler may be included in a range of 5 wt% or more to 60 wt% or less relative to the total weight of the two-component curable composition. The upper limit of the content of the first filler may be 59 wt%, 58 wt%, 57 wt%, 56 wt%, 55 wt%, 54 wt%, 53 wt%, 52 wt%, 51 wt%, 50 wt%, 49 wt%, 48 wt%, 47 wt%, 46 wt%, 45 wt%, or 44 wt% or so, and the lower limit of the content of the first filler may be 5.2 wt%, 5.4 wt%, 5.6 wt%, 5.8 wt%, 6 wt%, 6.2 wt%, 6.4 wt%, 6.6 wt%, 6.8 wt%, 7 wt%, 7.2 wt%, or 7.4 wt% or so, relative to the total weight of the two-component curable composition. The content of the first filler may also be more than or equal to any one lower limit of the above-described lower limits, less than or equal to any one upper limit of the above-described upper limits, or in a range between any one lower limit of the above-described lower limits and any one upper limit of the above-described upper limits. By controlling the content of the first filler as above and combining the above-described polyol and isocyanate compound, and the like, the result measured according to UL 94 V Test can secure Grade V-0 even when the halogen element-containing flame retardant and the phosphorus (P) element-containing flame retardant are not substantially included. Also, when the content of the first filler does not reach the above range, it may be difficult to secure flame retardancy without using the halogen element-containing flame retardant and the phosphorus (P) element-containing flame retardant. In addition, by controlling the content of the first filler as above and combining the above-described polyol and isocyanate compound, it is possible to simultaneously secure low specific gravity characteristics and heat dissipation characteristics, and to prevent a rapid increase in adhesion force even in a thermal shock test according to Mil-Std-883 Method 1010 or JEDEC JESD22-A104.

In the two-component curable composition according to one example of the present application, one or more selected from the group consisting of the first filler component of the main part and the second filler component of the curing agent part may comprise a second filler having a specific gravity of more than 3. The upper limit of the specific gravity of the second filler is not particularly limited, but may be 30, 28, 26, 24, 22, or 20 or so, and the specific gravity of the second filler may be in a range between more than 3 and any one upper limit of the above-described upper limits. In addition, the specific gravity of the second filler may be in a range between 3.1 or more and any one upper limit of the above-described upper limits.

The two-component curable composition according to one example of the present application may comprise a first filler and a second filler. The two-component curable composition may comprise the second filler in a range of 100 parts by weight to 2,000 parts by weight relative to 100 parts by weight of the first filler. The lower limit of the content of the second filler may be 105 parts by weight, 110 parts by weight, 115 parts by weight, 120 parts by weight, or 125 parts by weight or so, and the upper limit of the content of the second filler may be 1,900 parts by weight, 1,800 parts by weight, 1,700 parts by weight, 1,600 parts by weight, 1,500 parts by weight, 1,400 parts by weight, or 1,300 parts by weight or so, relative to 100 parts by weight of the first filler. The content of the second filler may also be more than any one lower limit of the above-described lower limits, less than or equal to any one upper limit of the above-described upper limits, or in a range between any one lower limit of the above-described lower limits and any one upper limit of the above-described upper limits. By controlling the content of the second filler as above, it is possible to simultaneously secure low specific gravity characteristics and heat dissipation characteristics.

In the two-component curable composition according to one example of the present application, a volume ratio (V_{A}/V_{B}) of the main part (V_{A}) and the curing agent part (V_{B}) may be in a range of 0.5 or more to 2 or less. The upper limit of the volume ratio (V_{A}/V_{B}) may be 1.8, 1.6, 1.4, or 1.2 or so, and the lower limit of the volume ratio (V_{A}/V_{B}) may be 0.6, 0.7, 0.8, 0.9, or 1 or so. The volume ratio (V_{A}/V_{B}) may also be more than or equal to any one lower limit of the above-described lower limits, less than or equal to any one upper limit of the above-described upper limits, or in a range between any one lower limit of the above-described lower limits and any one upper limit of the above-described upper limits.

The device according to one example of the present application comprises a heat-generating element and a heat carrier in thermal contact with the heat-generating element, where the heat carrier may comprise the cured product of the curable composition. In addition, the heat carrier of the device may comprise the cured product of the two-component curable composition comprising the main part and the curing agent part. That is, the heat carrier of the device may comprise one or more selected from the group consisting of the cured product of the curable composition, and the two-component curable composition comprising the main part and the curing agent part. The term thermal contact as used in the present application means that the cured product of the curable composition is physically in direct contact with the heat-generating element to dissipate heat generated from the heat-generating element, or even if the cured product of the curable composition is not in direct contact with the heat-generating element (that is, a separate layer exists between the cured product of the curable composition and the heat-generating element), it dissipates heat generated from the heat-generating element.

The device according to one example of the present application includes, for example, various electric and electronic products such as a clothes iron, a washing machine, a dryer, a clothes manager, an electric shaver, a microwave oven, an electric oven, an electric rice cooker, a refrigerator, a dishwasher, an air conditioner, a fan, a humidifier, an air purifier, a mobile phone, a radiotelegraph, a television, a radio, a computer and a laptop, or batteries such as a secondary battery, where the cured product of the curable composition can dissipate heat generated in the device. Particularly, in an electric vehicle battery manufactured by combining battery cells together to form one battery module, and combining several battery modules together to form a battery pack, the curable composition of the present application can be used as a material for connecting the battery modules. When the curable composition of the present application is used as a material for connecting the battery modules, it may play a role of dissipating heat generated from the battery cells and fixing the battery cells from external shock and vibration.

In the device according to one example of the present application, heat generated from the heat-generating element may be dissipated through the heat carrier, and the heat may be transferred to a cooling region. The cooling region may be in thermal contact with the heat carrier, and may have a lower temperature than that of the heat-generating element. The cooling region may mean a region having a lower temperature than the temperature of the heat-generating element by a medium such as cooling water, or may mean an air region or the like lower than the temperature of the heat-generating element.

### Advantageous Effects

The present application can provide a curable composition or a thermal interface material that exhibits low adhesion force to a predetermined adherend while having a low density as well as exhibiting a high thermal conductivity.

The present application can also provide a curable composition or a thermal interface material that secures excellent flame-retardant properties, and exhibits ejection properties and thixotropy suitable for processes in a state where halogen flame retardants or phosphorus-based flame retardants are not used, or the use ratio thereof is minimized.

The present application can also provide a product comprising the curable composition, the cured product of the curable composition, or the thermal interface material.

### Best Mode

Hereinafter, the present invention will be described through examples and comparative examples, but the scope of the present invention is not limited due to the contents presented below.

### Preparation Example 1.

A polyol (A) of Formula A below was prepared in the following manner.

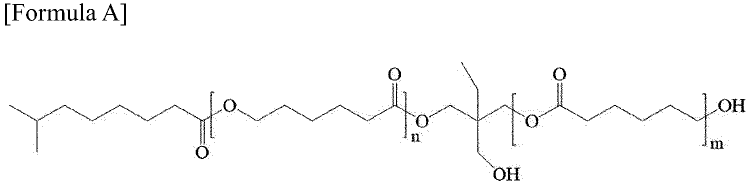

In Formula A, n and m are each more than 0, and their sum (n+m) is about 4.8.

A polycaprolactone polyol (Perstorp, Capa 3031) and isononanoic acid as a saturated fatty acid were mixed in a weight ratio of 1:0.53 (Capa 3031: isononanoic acid). Subsequently, a catalyst (tin (II) 2-ethylhexanoate (Sigma-Aldrich)) was added thereto in an amount of 0.1 parts by weight relative to 100 parts by weight of the mixture, and maintained while stirring at 150°C for 30 minutes under an inert gas purge condition. Subsequently, a small amount of xylene, an azeotropic solution, was added, the temperature was raised to 200°C, and the mixture was reacted for 3 hours or more, and then the pressure was reduced to 80 Torr or less, and xylene and unreacted materials were removed. The reactant was filtered after cooling to obtain a target product (compound of Formula A) having a weight average molecular weight of about 876 g/mol and being a bifunctional polyol.

In Examples and Comparative Examples below, the first filler component included in the main part may be represented by a filler component (F1), and the second filler component included in the curing agent part may be represented by a filler component (F2). In addition, the mixture of the main part and the curing agent part is represented by the final curable composition, and the filler components (F1+F2) included in the final curable composition include the first filler component and the second filler component.

### Example 1.

### Main part preparation

A polyol component (P), a filler component (F1), and a plasticizer (Pc, AEKYUNG Petrochemical Co., Ltd., diisononyl adipate) were mixed in a weight ratio of 9.8:89.1:1.1 (P: F1: Pc) to prepare a main part (V_{A}).

The polyol component (P) is a mixture that the polyol (A) of Preparation Example 1 above and a tri-functional polyester polyol (supplier: Kuraray, product name: F-2010, weight average molecular weight: 2,000 g/mol) are mixed in a weight ratio of 9:1 (A: F-2010).

The filler component (F1) is a mixture that spherical alumina (F11) having an average particle diameter of about 70 µm, spherical alumina (F12) having an average particle diameter of about 20 µm, and aluminum hydroxide (F13) having an average particle diameter of about 1 µm are mixed in a weight ratio of 70:12:18 (F11: F12: F13).

### Curing agent part preparation

An isocyanate component (H, Vencorex, Tolonate HDT-LV2), a filler component (F2) and a plasticizer (Pc, AEKYUNG Petrochemical Co., Ltd., diisononyl adipate) were mixed in a weight ratio of 3.9:91.7:4.4 (H: F2: Pc) to prepare a curing agent part (V_{B}). The Tolonate HDT-LV2 corresponds to a hexamethylene diisocyanate trimer.

The filler component (F2) is a mixture that spherical alumina (F21) having an average particle diameter of about 70 µm, spherical alumina (F22) having an average particle diameter of about 20 µm and alumina (F23) having an average particle diameter of about 1 µm are mixed in a weight ratio of 60:10:30 (F21: F22: F23).

### Preparation of final curable composition

The prepared main part (V_{A}) and curing agent part (V_{B}) were added to a static mixer in a volume ratio of 1:1 (V_{A}: V_{B}) and mixed to prepare a final curable composition. The curable composition contained about 89 wt% or so of the filler components (F1+F2) relative to the total weight, and about 7.4 wt% of aluminum hydroxide relative to the total weight of the curable composition. Also, the curable composition contained about 1,107 parts by weight of alumina relative to 100 parts by weight of aluminum hydroxide. In addition, the combined content of halogen and phosphorus (P) elements measured by ICP (Inductively Coupled Plasma) according to the following physical property measurement method was found to be 0.2 wt% or less relative to the total weight of the curable composition.

### Example 2.

### Main part preparation

A polyol component (P), a filler component (F1), and a plasticizer (Pc, AEKYUNG Petrochemical Co., Ltd., diisononyl adipate) were mixed in a weight ratio of 9.8:89.1:1.1 (P: F1: Pc) to prepare a main part (V_{A}).

The same polyol component (P) as the polyol component (P) of Example 1 was used.

The filler component (F1) is a mixture that spherical alumina (F11) having an average particle diameter of about 70 µm, spherical alumina (F12) having an average particle diameter of about 20 µm, and aluminum hydroxide (F13) having an average particle diameter of about 1 µm are mixed in a weight ratio of 45:30:25 (F11: F12: F13).

### Curing agent part preparation

An isocyanate component (H, Vencorex, Tolonate HDT-LV2), a filler component (F2) and a plasticizer (Pc, AEKYUNG Petrochemical Co., Ltd., diisononyl adipate) were mixed in a weight ratio of 3.9:91.7:4.4 (H: F2: Pc) to prepare a curing agent part (V_{B}).

The filler component (F2) is a mixture that spherical alumina (F21) having an average particle diameter of about 70 µm, spherical alumina (F22) having an average particle diameter of about 20 µm and alumina (F23) having an average particle diameter of about 1 µm are mixed in a weight ratio of 40:30:30 (F21: F22: F23).

### Preparation of final curable composition

The prepared main part (V_{A}) and curing agent part (V_{B}) were added to a static mixer in a volume ratio of 1:1 (V_{A}: V_{B}) and mixed to prepare a final curable composition. The curable composition contained about 89 wt% or so of the filler components (F1+F2) relative to the total weight, and about 8.4 wt% of aluminum hydroxide relative to the total weight of the curable composition. Also, the curable composition contained about 977 parts by weight of alumina relative to 100 parts by weight of aluminum hydroxide. In addition, the combined content of halogen and phosphorus (P) elements measured by ICP (Inductively Coupled Plasma) according to the following physical property measurement method was found to be 0.2 wt% or less relative to the total weight of the curable composition.

### Example 3.

### Main part preparation

A polyol component (P), a filler component (F1), and a plasticizer (Pc, AEKYUNG Petrochemical Co., Ltd., diisononyl adipate) were mixed in a weight ratio of 11.6:87.5:0.9 (P: F1: Pc) to prepare a main part (V_{A}).

The same polyol component (P) as the polyol component (P) of Example 1 was used.

The filler component (F1) is a mixture that spherical alumina (F11) having an average particle diameter of about 70 µm, aluminum hydroxide (F14) having an average particle diameter of about 50 µm, and aluminum hydroxide (F13) having an average particle diameter of about 1 µm are mixed in a weight ratio of 45:30:25 (F11: F14: F13).

### Curing agent part preparation

An isocyanate component (H, Vencorex, Tolonate HDT-LV2), a filler component (F2) and a plasticizer (Pc, AEKYUNG Petrochemical Co., Ltd., diisononyl adipate) were mixed in a weight ratio of 4:91.7:4.3 (H: F2: Pc) to prepare a curing agent part (V_{B}).

The filler component (F2) is a mixture that spherical alumina (F21) having an average particle diameter of about 70 µm, spherical alumina (F22) having an average particle diameter of about 20 µm and alumina (F23) having an average particle diameter of about 1 µm are mixed in a weight ratio of 40:30:30 (F21: F22: F23).

### Preparation of final curable composition

The prepared main part (V_{A}) and curing agent part (V_{B}) were added to a static mixer in a volume ratio of 1:1 (V_{A}: V_{B}) and mixed to prepare a final curable composition. The curable composition contained about 89 wt% or so of the filler components (F1+F2) relative to the total weight, and about 20.7 wt% of aluminum hydroxide relative to the total weight of the curable composition. Also, the curable composition contained about 332 parts by weight of alumina relative to 100 parts by weight of aluminum hydroxide. In addition, the combined content of halogen and phosphorus (P) elements measured by ICP (Inductively Coupled Plasma) according to the following physical property measurement method was found to be 0.2 wt% or less relative to the total weight of the curable composition.

### Example 4.

### Main part preparation

A polyol component (P), a filler component (F1), and a plasticizer (Pc, AEKYUNG Petrochemical Co., Ltd., diisononyl adipate) were mixed in a weight ratio of 11.0:88.2:0.8 (P: F1: Pc) to prepare a main part (V_{A}).

The same polyol component (P) as the polyol component (P) of Example 1 was used.

The filler component (F1) is a mixture that spherical alumina (F11) having an average particle diameter of about 70 µm, aluminum hydroxide (F15) having an average particle diameter of about 17 µm, and aluminum hydroxide (F13) having an average particle diameter of about 1 µm are mixed in a weight ratio of 60:20:20 (F11: F15: F13).

### Curing agent part preparation

An isocyanate component (H, Vencorex, Tolonate HDT-LV2), a filler component (F2) and a plasticizer (Pc, AEKYUNG Petrochemical Co., Ltd., diisononyl adipate) were mixed in a weight ratio of 5.2:89.9:4.9 (H: F2: Pc) to prepare a curing agent part (V_{B}).

The filler component (F2) is a mixture that spherical alumina (F21) having an average particle diameter of about 70 µm, aluminum hydroxide (F24) having an average particle diameter of about 17 µm and aluminum hydroxide (F25) having an average particle diameter of about 1 µm are mixed in a weight ratio of 60:20:20 (F21: F24: F25).

### Preparation of final curable composition

The prepared main part (V_{A}) and curing agent part (V_{B}) were added to a static mixer in a volume ratio of 1:1 (V_{A}: V_{B}) and mixed to prepare a final curable composition. The curable composition contained about 88 wt% or so of the filler components (F1+F2) relative to the total weight, and about 35.4 wt% of aluminum hydroxide relative to the total weight of the curable composition. Also, the curable composition contained about 150 parts by weight of alumina relative to 100 parts by weight of aluminum hydroxide. In addition, the combined content of halogen and phosphorus (P) elements measured by ICP (Inductively Coupled Plasma) according to the following physical property measurement method was found to be 0.2 wt% or less relative to the total weight of the curable composition.

### Example 5.

### Main part preparation

A polyol component (P), a filler component (F1), and a plasticizer (Pc, AEKYUNG Petrochemical Co., Ltd., diisononyl adipate) were mixed in a weight ratio of 11.6:87.7:0.7 (P: F1: Pc) to prepare a main part (V_{A}).

The same polyol component (P) as the polyol component (P) of Example 1 was used.

The filler component (F1) is a mixture that spherical alumina (F11) having an average particle diameter of about 70 µm, aluminum hydroxide (F15) having an average particle diameter of about 17 µm, and aluminum hydroxide (F13) having an average particle diameter of about 1 µm are mixed in a weight ratio of 50:30:20 (F11: F15: F13).

### Curing agent part preparation

An isocyanate component (H, Vencorex, Tolonate HDT-LV2), a filler component (F2) and a plasticizer (Pc, AEKYUNG Petrochemical Co., Ltd., diisononyl adipate) were mixed in a weight ratio of 5.5:89.4:5.1 (H: F2: Pc) to prepare a curing agent part (V_{B}).

The filler component (F2) is a mixture that spherical alumina (F21) having an average particle diameter of about 70 µm, aluminum hydroxide (F24) having an average particle diameter of about 17 µm and aluminum hydroxide (F25) having an average particle diameter of about 1 µm are mixed in a weight ratio of 50:30:20 (F21: F24: F25).

### Preparation of final curable composition

The prepared main part (V_{A}) and curing agent part (V_{B}) were added to a static mixer in a volume ratio of 1:1 (V_{A}: V_{B}) and mixed to prepare a final curable composition. The curable composition contained about 88 wt% or so of the filler components (F1+F2) relative to the total weight, and about 43.9 wt% of aluminum hydroxide relative to the total weight of the curable composition. Also, the curable composition contained about 100 parts by weight of alumina relative to 100 parts by weight of aluminum hydroxide. In addition, the combined content of halogen and phosphorus (P) elements measured by ICP (Inductively Coupled Plasma) according to the following physical property measurement method was found to be 0.2 wt% or less relative to the total weight of the curable composition.

### Comparative Example 1.

### Main part preparation

A polyol component (P), a filler component (F1), a plasticizer (Pc, AEKYUNG Petrochemical Co., Ltd., diisononyl adipate), and a phosphorus (P) element-containing solid flame retardant (SF, CHEMPIA, X-GUARD FR-119L) were mixed in a weight ratio of 8.5:88.9:1.2:1.4 (P: F1: Pc: SF) to prepare a main part (V_{A}).

The same polyol component (P) as the polyol component (P) of Example 1 was used.

The filler component (F1) is a mixture that spherical alumina (F11) having an average particle diameter of about 70 µm, spherical alumina (F12) having an average particle diameter of about 20 µm, and alumina (F16) having an average particle diameter of about 1 µm are mixed in a weight ratio of 60:20:20 (F11: F12: F16).

### Curing agent part preparation

An isocyanate component (H, Vencorex, Tolonate HDT-LV2), a filler component (F2), a plasticizer (Pc, AEKYUNG Petrochemical Co., Ltd., diisononyl adipate), and a phosphorus (P) element-containing solid flame retardant (SF, CHEMPIA, X-GUARD FR-119L) were mixed in a weight ratio of 3.8:90.2:4.4:1.6 (H: F2: Pc: SF) to prepare a curing agent part (V_{B}).

The filler component (F2) is a mixture that spherical alumina (F21) having an average particle diameter of about 70 µm, spherical alumina (F22) having an average particle diameter of about 20 µm and alumina (F23) having an average particle diameter of about 1 µm are mixed in a weight ratio of 60:20:20 (F21: F22: F23).

### Preparation of final curable composition

The prepared main part (V_{A}) and curing agent part (V_{B}) were added to a static mixer in a volume ratio of 1:1 (V_{A}: V_{B}) and mixed to prepare a final curable composition. The curable composition contained about 88 wt% or so of the filler components (F1+F2) relative to the total weight. In addition, the curable composition contained about 1.52 wt% of the phosphorus (P) element-containing solid flame retardant relative to the total weight. In this regard, the combined content of halogen and phosphorus (P) elements measured by ICP (Inductively Coupled Plasma) according to the following physical property measurement method was found to be about 0.35 wt% or more relative to the total weight of the curable composition.

### Comparative Example 2.

### Main part preparation

A polyol component (P), a filler component (F1), and a plasticizer (Pc, AEKYUNG Petrochemical Co., Ltd., diisononyl adipate) were mixed in a weight ratio of 9.8:89.1:1.1 (P: F1: Pc) to prepare a main part (V_{A}).

The same polyol component (P) as the polyol component (P) of Example 1 was used.

The filler component (F1) is a mixture that spherical alumina (F11) having an average particle diameter of about 70 µm, spherical alumina (F12) having an average particle diameter of about 20 µm, and aluminum hydroxide (F13) having an average particle diameter of about 1 µm are mixed in a weight ratio of 67:22:11 (F11: F12: F13).

### Curing agent part preparation

An isocyanate component (H, Vencorex, Tolonate HDT-LV2), a filler component (F2) and a plasticizer (Pc, AEKYUNG Petrochemical Co., Ltd., diisononyl adipate) were mixed in a weight ratio of 3.9:91.7:4.4 (H: F2: Pc) to prepare a curing agent part (V_{B}).

The filler component (F2) is a mixture that spherical alumina (F21) having an average particle diameter of about 70 µm, spherical alumina (F22) having an average particle diameter of about 20 µm and alumina (F23) having an average particle diameter of about 1 µm are mixed in a weight ratio of 60:20:20 (F21: F22: F23).

### Preparation of final curable composition

The prepared main part (V_{A}) and curing agent part (V_{B}) were added to a static mixer in a volume ratio of 1:1 (V_{A}: V_{B}) and mixed to prepare a final curable composition. The curable composition contained about 89 wt% or so of the filler components (F1+F2) relative to the total weight, and about 4.6 wt% of aluminum hydroxide relative to the total weight of the curable composition. Also, the curable composition contained about 1,848 parts by weight of alumina relative to 100 parts by weight of aluminum hydroxide. In addition, the combined content of halogen and phosphorus (P) elements measured by ICP (Inductively Coupled Plasma) according to the following physical property measurement method was found to be 0.2 wt% or less relative to the total weight of the curable composition.

### Comparative Example 3.

### Main part preparation

A polyol component (P), a filler component (F1), and a plasticizer (Pc, AEKYUNG Petrochemical Co., Ltd., diisononyl adipate) were mixed in a weight ratio of 11.7:87.1:1.2 (P: F1: Pc) to prepare a main part (V_{A}).

As the polyol component (P), the polyol (A) of Preparation Example 1 was used.

The filler component (F1) is a mixture that spherical alumina (F11) having an average particle diameter of about 70 µm, aluminum hydroxide (F14) having an average particle diameter of about 50 µm, and aluminum hydroxide (F13) having an average particle diameter of about 1 µm are mixed in a weight ratio of 45:30:25 (F11: F14: F13).

### Curing agent part preparation

An isocyanate component (H, Vencorex, Tolonate HDT-LV2), a filler component (F2) and a plasticizer (Pc, AEKYUNG Petrochemical Co., Ltd., diisononyl adipate) were mixed in a weight ratio of 4.2:91.6:4.2 (H: F2: Pc) to prepare a curing agent part (V_{B}).

The filler component (F2) is a mixture that spherical alumina (F21) having an average particle diameter of about 70 µm, spherical alumina (F22) having an average particle diameter of about 20 µm and alumina (F23) having an average particle diameter of about 1 µm are mixed in a weight ratio of 40:30:30 (F21: F22: F23).

### Preparation of final curable composition

The prepared main part (V_{A}) and curing agent part (V_{B}) were added to a static mixer in a volume ratio of 1:1 (V_{A}: V_{B}) and mixed to prepare a final curable composition. The curable composition contained about 88 wt% or so of the filler components (F1+F2) relative to the total weight, and about 20 wt% of aluminum hydroxide relative to the total weight of the curable composition. Also, the curable composition contained about 341 parts by weight of alumina relative to 100 parts by weight of aluminum hydroxide. In addition, the combined content of halogen and phosphorus (P) elements measured by ICP (Inductively Coupled Plasma) according to the following physical property measurement method was found to be 0.2 wt% or less relative to the total weight of the curable composition.

### Comparative Example 4.

### Main part preparation

A polyol component (P), a filler component (F1), and a plasticizer (Pc, AEKYUNG Petrochemical Co., Ltd., diisononyl adipate) were mixed in a weight ratio of 12.3:87.1:0.6 (P: F1: Pc) to prepare a main part (V_{A}).

The polyol component (P) is a mixture that the polyol (A) of Preparation Example 1 above and a tri-functional polyester polyol (supplier: Kuraray, product name: F-2010, weight average molecular weight: 2,000 g/mol) are mixed in a weight ratio of 8:2 (A: F-2010).

The filler component (F1) is a mixture that spherical alumina (F11) having an average particle diameter of about 70 µm, aluminum hydroxide (F14) having an average particle diameter of about 50 µm, and aluminum hydroxide (F13) having an average particle diameter of about 1 µm are mixed in a weight ratio of 45:30:25 (F11: F14: F13).

### Curing agent part preparation

An isocyanate component (H, Vencorex, Tolonate HDT-LV2), a filler component (F2) and a plasticizer (Pc, AEKYUNG Petrochemical Co., Ltd., diisononyl adipate) were mixed in a weight ratio of 3.8:91.7:4.5 (H: F2: Pc) to prepare a curing agent part (V_{B}).

The filler component (F2) is a mixture that spherical alumina (F21) having an average particle diameter of about 70 µm, spherical alumina (F22) having an average particle diameter of about 20 µm and alumina (F23) having an average particle diameter of about 1 µm are mixed in a weight ratio of 40:30:30 (F21: F22: F23).

### Preparation of final curable composition

The prepared main part (V_{A}) and curing agent part (V_{B}) were added to a static mixer in a volume ratio of 1:1 (V_{A}: V_{B}) and mixed to prepare a final curable composition. The curable composition contained about 88 wt% or so of the filler components (F1+F2) relative to the total weight, and about 20 wt% of aluminum hydroxide relative to the total weight of the curable composition. Also, the curable composition contained about 341 parts by weight of alumina relative to 100 parts by weight of aluminum hydroxide. In addition, the combined content of halogen and phosphorus (P) elements measured by ICP (Inductively Coupled Plasma) according to the following physical property measurement method was found to be 0.2 wt% or less relative to the total weight of the curable composition.

### Comparative Example 5.

### Main part preparation

A polyol component (P), a filler component (F1), and a plasticizer (Pc, AEKYUNG Petrochemical Co., Ltd., diisononyl adipate) were mixed in a weight ratio of 11.6:87.5:0.9 (P: F1: Pc) to prepare a main part (V_{A}).

As the polyol component (P), a tri-functional polyester polyol (supplier: Kuraray, product name: F-2010, weight average molecular weight: 2,000 g/mol) was used.

The filler component (F1) is a mixture that spherical alumina (F11) having an average particle diameter of about 70 µm, aluminum hydroxide (F14) having an average particle diameter of about 50 µm, and aluminum hydroxide (F13) having an average particle diameter of about 1 µm are mixed in a weight ratio of 45:30:25 (F11: F14: F13).

### Curing agent part preparation

An isocyanate component (H, Vencorex, Tolonate HDT-LV2), a filler component (F2) and a plasticizer (Pc, AEKYUNG Petrochemical Co., Ltd., diisononyl adipate) were mixed in a weight ratio of 4:91.7:4.3 (H: F2: Pc) to prepare a curing agent part (V_{B}).

The filler component (F2) is a mixture that spherical alumina (F21) having an average particle diameter of about 70 µm, spherical alumina (F22) having an average particle diameter of about 20 µm and alumina (F23) having an average particle diameter of about 1 µm are mixed in a weight ratio of 40:30:30 (F21: F22: F23).

### Preparation of final curable composition

The prepared main part (V_{A}) and curing agent part (V_{B}) were added to a static mixer in a volume ratio of 1:1 (V_{A}: V_{B}) and mixed to prepare a final curable composition. The curable composition contained about 88 wt% or so of the filler components (F1+F2) relative to the total weight, and about 20 wt% of aluminum hydroxide relative to the total weight of the curable composition. Also, the curable composition contained about 341 parts by weight of alumina relative to 100 parts by weight of aluminum hydroxide. In addition, the combined content of halogen and phosphorus (P) elements measured by ICP (Inductively Coupled Plasma) according to the following physical property measurement method was found to be 0.2 wt% or less relative to the total weight of the curable composition.

Physical properties presented in Examples and Comparative Examples were evaluated in the following manner.

### <Physical property measurement methods>

### 1. Viscosity and thixotropic index (T.I.)

### [Viscosity measurement method]

After setting a shear rate at 2.4 s⁻¹ by means of a viscometer (manufacturer: Brookfield, model name: DV3THB-CP) and a spindle CPA-52Z, and rotating it for 180 seconds, the viscosities of the main parts and the curing agent parts of Examples and Comparative Examples were measured as the final viscosity measurement values. The viscosity was measured at 25°C.

Specifically, a plate was mounted on the plate connection part of the viscometer, and it was adjusted through a control lever to form a constant gap between the spindle and the plate. The plate was separated, and 0.5 mL or so of the measurement target was applied to the center of the separated plate. The plate applied with the measurement target was again mounted on the plate connection part of the viscometer, and after waiting until the torque value became 0, the shear rate was set to 2.4 s⁻¹ and it was rotated for 180 seconds to measure the viscosity, and the final viscosity value was measured as the viscosity of the measurement target. Here, the measurement target means the main part or the curing agent part.

### [Thixotropic index measurement method]

For the measuring target, the viscosity was measured in the same manner as the above viscosity measurement method, but the shear rates were set to 0.24 s⁻¹ and 2.4 s⁻¹, respectively, to measure the viscosities, and then the thixotropic index (T.I.) was measured according to the following equation. [Thixotropic index calculus equation] $Thixotropic Index \left(T.I.\right) = {V}_{1} / {V}_{2}$

In Calculus Equation above, V₁ is the viscosity of the measurement target measured under conditions of 25°C and 0.24 s⁻¹, and V₂ is the viscosity of the measurement target measured under conditions of 25°C and 2.4 s⁻¹.

### 2. Specific gravity

Each of the final curable compositions prepared in Examples and Comparative Examples was cured at about 25°C for about 24 hours to form a cured product, which was cut into pieces to prepare a sample, and then the specific gravity of the sample was measured at 25°C using a pycnometer. The specific gravity is measured based on the density (1 g/cm³) of water measured at 1 atm and 4°C, and has a dimensionless unit.

### 3. Thermal conductivity

The thermal conductivity was measured using a hot disk method. Specifically, each of the final curable compositions prepared in Examples and Comparative Examples was cured in a disk-shaped mold having a diameter of about 4 cm and a thickness of about 5 mm at about 25°C for 24 hours to obtain a cured product sample, and the thermal conductivity was measured with a thermal constant analyzer according to ISO 22007-2 standard along the thickness direction of the sample. As stipulated in the above standard (ISO 22007-2), the hot disk equipment was a device that could identify thermal conductivity by measuring temperature change (electrical resistance change) while heating the sensor in which the nickel wire had a double spiral structure, and the thermal conductivity was measured according to such a standard.

### 4. Flame retardancy

Each of the final curable compositions prepared in Examples and Comparative Examples was cured at about 25°C for about 24 hours to form a cured product having a width of 13 mm, a length of 125 mm and a thickness of 2 mm, and it was measured from the formed cured product according to UL94V measurement criteria. If the result measured according to the UL94V measurement criteria was Grade V-0, it was evaluated as PASS, and in the case of other grades, it was evaluated as NG.

### 5. Measurement of adhesion force to polyester

Specimens prepared by attaching a PET (polyethylene terephthalate) film and an aluminum plate as adherends were evaluated. A film having a width of 10 mm or so and a length of 200 mm or so was used as the PET film, and a plate having each of a width and a length of 100 mm or so was used as the aluminum plate. The final curable compositions according to Examples or Comparative Examples were each applied on the entire surface of the aluminum plate (applied so that the thickness after curing was about 2 mm or so), and the PET film in a state of being closely attached on the layer of the curable composition was maintained at about 25°C for about 24 hours to prepare the specimen. At this time, the entire width and 100 mm or so of the length portion in the PET film were attached to the aluminum plate via the curable composition. In the specimen, while the PET film was peeled from the aluminum plate in the longitudinal direction in a state where the aluminum plate was fixed thereon, the adhesion force to the polyester was measured. The peeling was performed at a peel speed of about 0.5 mm/min or so and a peel angle of about 180 degrees until the PET film was completely peeled off.

### 6. Measurement of adhesion force to aluminum

The final curable compositions according to Examples or Comparative Examples were each coated in the center of an aluminum substrate having horizontal and vertical lengths of 2 cm and 7 cm, respectively, to have a width of 2 cm and a length of 2 cm or so, and an aluminum substrate having horizontal and vertical lengths of 2 cm and 7 cm, respectively, was attached again on the coating layer, and the curable composition was cured by maintaining the state. The curing was performed at about 25°C for about 24 hours. Here, the two aluminum substrates were attached to form an angle of 90 degrees to each other. Hereinafter, with the upper aluminum substrate fixed, the lower aluminum substrate was pressed at a speed of 0.5 mm/min to measure the force while the lower aluminum substrate was separated, and the adhesion force to aluminum was obtained by dividing the maximum force measured in the process by the area of the specimen.

### 7. Shore OO hardness

For the cured product of each final curable composition according to Examples or Comparative Examples, Shore OO hardness was measured according to ASTM D 2240 standard. It was performed using ASKER's durometer hardness device, where the initial hardness was measured by applying a load of 1 kg or more (about 1.5 kg) to the surface of the cured product in the form of a film, and the hardness was evaluated by confirming the stabilized measured value after 15 seconds. The cured product was formed by holding the final curable composition at about 25°C for about 24 hours.

### 8. Curvature radius

The curvature radius of the cured product of each final curable composition according to Examples or Comparative Examples was evaluated as a cured product having a width of 1 cm, a length of 10 cm, and a thickness of 2 mm. When the cured body is attached to cylinders having various radii and bent along the longitudinal direction, the curvature radius is the minimum radius of the cylinder at which cracks do not occur in the cured body. The cured product was formed by holding the final curable composition at about 25°C for about 24 hours.

### 9. Module workability

The final curable compositions according to Examples or Comparative Examples were each applied to an aluminum plate to have a square shape with a width of 8 cm and a length of 8 cm and a thickness of about 2 mm or so. Hereinafter, the applied curable composition was maintained at about 25°C for about 24 hours, and cured. Subsequently, while the formed cured product was removed from the aluminum plate, module workability was evaluated according to [module workability evaluation criteria] below.

### [Module workability evaluation criteria]

PASS: When the cured product is peeled off in a sheet shape without leaving a residue on the aluminum plate
NG: When the cured product is not peeled off from the aluminum plate, or a residue remains even after being peeled off

### 10. Measurement of particle average particle diameter

The particle average particle diameter of the filler is the D50 particle diameter of the filler, which is the particle diameter measured by Marvern's MASTERSIZER3000 equipment in accordance with ISO-13320 standard. Upon measurement, distilled water was used as a solvent. The incident laser is scattered by the fillers dispersed in the solvent, and the values of the intensity and directionality of the scattered laser vary depending on the size of the filler, which are analyzed using the Mie theory, whereby the D50 particle diameter can be obtained. Through the above analysis, the distribution can be obtained through conversion to the diameter of a sphere having the same volume as the dispersed fillers, and the particle diameter can be evaluated by obtaining the D50 value, which is the median value of the distribution.

### 11. Measurement of weight average molecular weight

The weight average molecular weight (Mw) was measured using GPC (Gel permeation chromatography). Specifically, the weight average molecular weight (Mw) can be measured by adding a sample to be analyzed into a 5 mL vial, diluting it with a THF (tetrahydrofuran) solvent to a concentration of about 1 mg/mL, and then filtering a standard sample for calibration and the analysis sample through a syringe filter (pore size: 0.45 µm). Agilent technologies' ChemStation is used as an analysis program, and the weight average molecular weight (Mw) can be obtained by comparing the elution time of the sample with the calibration curve.

### <GPC measurement conditions>

Instrument: Agilent technologies' 1200 series
Column: using Agilent technologies' TL Mix. A & B
Solvent: THF (tetrahydrofuran)
Column temperature: 35°C
Sample concentration: 1 mg/mL, 200 µl injection
Standard sample: using polystyrene (MP: 3900000, 723000, 316500, 52200, 31400, 7200, 3940, 485)

### 12. Measurement of halogen and phosphorus elements

A sample weighing 0.1 g of each of the final curable compositions prepared in the above Examples and Comparative Examples was placed in a vial and 1 mL of nitric acid was added thereto. Hereinafter, a small amount of hydrogen peroxide was added to the vial, and heated on a hot plate to dissolve the sample. When the sample was completely dissolved and had a transparent color, the analysis sample was prepared by adding tertiary ultrapure water thereto so that the total volume was 10 mL. In the analysis sample, the contents of halogen and phosphorus elements were measured through ICP-OES (Inductively Coupled Plasma-Optical Emission Spectrometer) analysis, and the analysis conditions are as follows. The contents of halogen and phosphorus elements measured according to the analysis may each be measured, and the combined content of the halogen and phosphorus elements may be measured by adding them.

### [ICP-OES analysis conditions]

RF power: 1,300 W
Torch Height: 15.0 mm
Plasma Gas Flow: 15.00 L/min
Sample Gas Flow: 0.8 L/min
Aux. Gas Flow: 0.2 L/min
Pump Speed: 1.5 mL/min
Internal Standard: Yttrium (Y) or Scandium (Sc)

The results of the test data measured in Examples and Comparative Examples above were summarized in Tables 1 and 2 below.

**[Table 1]**

| Classification | | Main part | | Curing agent part | |
|---|---|---|---|---|---|
| | | Room temperature viscosity (kcP) | Thixotropic index | Room temperature viscosity (kcP) | Thixotropic index |
| Example | 1 | 231 | 4.0 | 273 | 2.8 |
| | 2 | 144 | 3.2 | 191 | 6.2 |
| | 3 | 284 | 3.5 | 201 | 6.6 |
| | 4 | 213 | 2.7 | 135 | 5.1 |
| | 5 | 260 | 2.7 | 143 | 6.5 |
| Comparative Example | 1 | 286 | 3.8 | 221 | 4.1 |
| | 2 | 139 | 3.3 | 160 | 5.6 |
| | 3 | 282 | 3.3 | 145 | 5.4 |
| | 4 | 425 | 3.2 | 391 | 2.5 |
| | 5 | Compounding fail | | | |

**[Table 2]**

| Classification | | Specific gravity | Thermal conductivity (W/mK) | Flame retardancy evaluation | Adhesion force to polyester (gf/cm) | Adhesion force to aluminum (N/mm²) | Shore OO hardness | Curvature radius (mm) | Module workability |
|---|---|---|---|---|---|---|---|---|---|
| Example | 1 | 2.93 | 3.114 | PASS | 99 | 0.04 | 86 | 9 | PASS |
| | 2 | 2.93 | 3.095 | PASS | 91 | 0.077 | 85 | 8 | PASS |
| | 3 | 2.73 | 3.000 | PASS | 93 | 0.063 | 85 | 7 | PASS |
| | 4 | 2.52 | 2.768 | PASS | 84 | 0.038 | 85 | 7 | PASS |
| | 5 | 2.42 | 2.604 | PASS | 64 | 0.086 | 83 | 8 | PASS |
| Comparative Example | 1 | 3.22 | 2.767 | NG (Grade V-1) | 53 | 0.058 | 86 | 9 | PASS |
| | 2 | 2.97 | 2.772 | NG (no flame retardancy) | 101 | 0.139 | 88 | 10 | PASS |
| | 3 | 2.73 | 2.799 | PASS | 61 | 0.112 | 80 | 8 | PASS |
| | 4 | 2.73 | 2.820 | PASS | 139 | 0.054 | 90 | 9 | PASS |
| | 5 | Compounding fail | | | | | | | |

Referring to Table 1 above, it can be regarded that in Examples 1 to 5, the main parts and the curing agent parts have appropriate viscosities and thixotropic indexes. Referring to Table 2 above, it can be confirmed that Examples 1 to 5 have low specific gravity characteristics and excellent thermal conductivities, and it can be regarded that excellent flame retardancy is ensured without adding flame retardants of phosphorus or halogen series. Also, it can be regarded that in Examples 1 to 5, the adhesion force to polyester and adhesion force to aluminum are low adhesion force suitable for the purpose of the present application. Furthermore, it can be confirmed that Examples 1 to 5 have surface hardness suitable for the purpose of the present application, are flexible, and have excellent workability.

On the other hand, referring to Table 2 above, it was shown that Comparative Example 1 had a relatively high specific gravity and poor flame retardancy. In addition, Comparative Example 1 exhibited relatively low thermal conductivity despite the use of an excessive amount of alumina by weakening heat dissipation characteristics due to the use of the phosphorus-based flame retardant.

In addition, referring to Table 2, it was shown that Comparative Example 2 had no flame retardancy as the clamp was partially burned when measured according to the UL94V measurement criteria because the content of aluminum hydroxide was small compared to the total composition. In Examples, aluminum hydroxide is included within the range specified in the present application, and particularly, when comparing Example 1 and Comparative Example 2, the difference in flame retardant properties is remarkable. This can be regarded as indicating that there is a critical significance for the content of aluminum hydroxide. Furthermore, in Comparative Example 2, it can be regarded that the adhesion force inappropriate for the purpose of the present application has been developed between the PET and the aluminum plate due to the imbalance of the combination between the filler component and the polyol and isocyanate components in the composition.

Referring to Table 2, Comparative Examples 3 and 4 do not combine the polyol component as shown in the present application, and thus it can be regarded that the adhesion force to aluminum or PET is not suitable for the purpose of the present application. In addition, referring to Table 1, Comparative Example 4 did not combine the polyol component as shown in the present application, so that the main part and the curing agent part had high viscosities, thereby being inappropriate for the process.

Referring to Tables 1 and 2, in Comparative Example 5, the main part and the curing agent part had high viscosities to the extent that the compounding was impossible, and thus the physical properties could not be measured.

The present disclosure further includes the following items:

### [Item 1]

A curable composition comprising:
a polyol component; and
a filler component, and forming
a cured product exhibiting flame retardancy of Grade V-0 or more while having a specific gravity of 3 or less, a thermal conductivity of 2 W/mK or more, and a combined content of halogen and phosphorus elements of 0.3 wt% or less.

### [Item 2]

The curable composition according to item 1, forming the cured product having adhesion force to aluminum of 0.1 N/mm² or less and adhesion force to polyester of 100 gf/cm or less.

### [Item 3]

The curable composition according to item 1, wherein a viscosity measured at a shear rate of 2.4 s⁻¹ is 400 kcP or less at 25°C.

### [Item 4]

The curable composition according to item 1, wherein the polyol component comprises a first polyol that is a bifunctional polyol and a second polyol that is a polyol with tri-functionality or more.

### [Item 5]

The curable composition according to item 4, wherein the first polyol or the second polyol comprises a branched hydrocarbon chain having 3 or more carbon atoms at the terminal.

### [Item 6]

The curable composition according to item 4, wherein the first polyol or the second polyol is a polyol having a polycaprolactone polyol unit or an alkane diol unit; a polyol unit and a dicarboxylic acid unit, and
the polyol unit is a unit derived from a polyol that is an alkane with 1 to 20 carbon atoms substituted with 3 to 10 hydroxyl groups.

### [Item 7]

The curable composition according to item 4, wherein the first polyol and the second polyol are polyester polyols.

### [Item 8]

The curable composition according to item 4, wherein the polyol component comprises more than 80 wt% of the first polyol relative to the total weight of the polyol component.

### [Item 9]

The curable composition according to item 4, wherein a weight ratio (P_{A}/P_{B}) of the first polyol (P_{A}) and the second polyol (P_{B}) is 5 or more.

### [Item 10]

The curable composition according to item 4, wherein the first polyol has a weight average molecular weight of 100 g/mol to 2,000 g/mol, and the second polyol has a weight average molecular weight of 500 g/mol to 5,000 g/mol.

### [Item 11]

The curable composition according to item 1, comprising 70 wt% or more of the filler component relative to the total weight.

### [Item 12]

The curable composition according to item 1, wherein the filler component comprises a first filler having a specific gravity of 3 or less and a second filler having a specific gravity of more than 3.

### [Item 13]

The curable composition according to item 11, wherein the first filler is a metal hydroxide.

### [Item 14]

The curable composition according to item 11, comprising 10 wt% or more of the first filler relative to the total weight.

### [Item 15]

The curable composition according to item 11, wherein the second filler comprises one or more selected from the group consisting of aluminum oxide, magnesium oxide, beryllium oxide, titanium oxide, silicon nitride, aluminum nitride, silicon carbide, copper, silver, iron, and titanium.

### [Item 16]

The curable composition according to item 11, wherein the filler component comprises the second filler in a range of 50 to 800 parts by weight relative to 100 parts by weight of the first filler.

### [Item 17]

A two-component curable composition comprising:
a main part including a polyol component and a first filler component; and
a curing agent part including an isocyanate component and a second filler component, and forming
a cured product exhibiting flame retardancy of Grade V-0 or more and having adhesion force to aluminum of 0.1 N/mm² or less, while having a combined content of halogen and phosphorus elements of 0.3 wt% or less.

### [Item 18]

The curable composition according to item 17, wherein one or more selected from the group consisting of the first filler component and the second filler component comprise a first filler having a specific gravity of 3 or less, and
comprise 5 wt% or more of the first filler relative to the total weight.

### [Item 19]

The curable composition according to item 17, wherein the isocyanate component is a non-aromatic isocyanate compound.

### [Item 20]

A device comprising a heat-generating element and a heat carrier in thermal contact with the heat-generating element, wherein
the heat carrier comprises one or more selected from the group consisting of the cured product of the curable composition according to item 1 and the cured product of the two-component curable composition according to item 17.

## Claims

1. A curable composition, comprising:
a polyol component; and
a filler component,
wherein the polyol component comprises a first polyol that is a bifunctional polyol and a second polyol that is a polyol with tri-functionality or more,
the first polyol or the second polyol comprises a linear or branched hydrocarbon chain having 3 or more carbon atoms at its terminal,
the filler component comprises a first filler having a specific gravity of 3 or less and a second filler having a specific gravity of more than 3,
an amount of the filler component in the curable composition is 70 weight% or more,
an amount of the first filler relative in the curable composition is 10 weight% or more,
a combined content of halogen and phosphorus elements is 0.3 weight% or less, and
wherein the curable composition, upon curing, forms a cured product exhibiting a specific gravity of 3 or less.

2. The curable composition according to claim 1, wherein the filler component comprises the second filler in an amount of 50 to 800 parts by weight relative to 100 parts by weight of the first filler.

3. The curable composition according to claim 1 or 2, the first polyol or the second polyol is a polyol having a polycaprolactone polyol unit or an alkane diol unit; a polyol unit and a dicarboxylic acid unit.

4. The curable composition according to any one of claims 1 to 3, wherein the first polyol or the second polyol is a polyol having a polycaprolactone polyol unit or an alkane diol unit; a polyol unit that is a unit derived from a polyol that is an alkane with 1 to 20 carbon atoms substituted with 3 to 10 hydroxyl groups; and a dicarboxylic acid unit.

5. The curable composition according to any one of claims 1 to 4, wherein the first polyol and the second polyol are polyester polyols.

6. The curable composition according to any one of claims 1 to 5, wherein the polyol component comprises more than 80 weight% of the first polyol relative to the total weight of the polyol component.

7. The curable composition according to claim 6, wherein a weight ratio (P_{A}/P_{B}) of the first polyol (P_{A}) and the second polyol (P_{B}) is 5 or more.

8. The curable composition according to any one of claims 1 to 7, wherein the first polyol has a weight average molecular weight of 100 g/mol to 2,000 g/mol.

9. The curable composition according to any one of claims 1 to 8, wherein the second polyol has a weight average molecular weight of 500 g/mol to 5,000 g/mol.

10. The curable composition according to any one of claims 1 to 9, wherein the first filler is a metal hydroxide.

11. The curable composition according to any one of claims 1 to 10, wherein the second filler comprises one or more selected from the group consisting of aluminum oxide, magnesium oxide, beryllium oxide, titanium oxide, silicon nitride, aluminum nitride, silicon carbide, copper, silver, iron, and titanium.

12. A two-component curable composition, comprising:
a main part including a polyol component and a first filler component; and
a curing agent part including an isocyanate component and a second filler component,
wherein the polyol component comprises a first polyol that is a bifunctional polyol and a second polyol that is a polyol with tri-functionality or more,
the first polyol or the second polyol comprises a linear or branched hydrocarbon chain having 3 or more carbon atoms at the terminal,
the first or second filler component comprises a first filler having a specific gravity of 3 or less and a second filler having a specific gravity of more than 3,
an amount of the filler component in the two-component curable composition is 70 weight% or more,
an amount of the first filler in two-component curable composition is 10 weight% or more, and
a combined content of halogen and phosphorus elements is 0.3 weight% or less, and wherein the two-component curable composition, upon curing, forms a cured product exhibiting a specific gravity of 3 or less.

13. The curable composition according to claim 12, wherein the isocyanate component is a non-aromatic isocyanate compound.

14. A device, comprising:
a heat-generating element and
a heat carrier in thermal contact with the heat-generating element,
wherein the heat carrier comprises the cured product of the curable composition according to any one of claims 1 to 11.

15. A device, comprising:
a heat-generating element and
a heat carrier in thermal contact with the heat-generating element,
wherein the heat carrier comprises the cured product of the two-component curable composition of claim 12 or 13.
